(19) Europäisches Patentamt
European Patent Office
Office européen des brevets

(11) EP 0 799 252 B1

# (12) FASCICULE DE BREVET EUROPEEN

(45) Date de publication et mention de la délivrance du brevet:
**05.01.2000 Bulletin 2000/01**

(21) Numéro de dépôt: **96934919.0**

(22) Date de dépôt: **16.10.1996**

(51) Int Cl.[7]: **C08F 8/34**, C08L 95/00, C08C 19/20

(86) Numéro de dépôt international:
**PCT/FR96/01613**

(87) Numéro de publication internationale:
**WO 97/14726 (24.04.1997 Gazette 1997/18)**

(54) **ELASTOMERE FONCTIONNALISE PAR DES GROUPEMENTS CARBOXYLIQUES OU ESTERS GREFFES ET SON APPLICATION A LA PRODUCTION DE COMPOSITIONS BITUME/ELASTOMERE FONCTIONNALISE UTILISABLES POUR LA REALISATION DE REVETEMENTS**

MITTELS CARBOXYLGRUPPEN ODER GEPFROPTEN ESTERN FUNKTIONALISIERTES ELASTOMER UND VERWENDUNG DAVON ZUR HERSTELLUNG VON BITUMEN/FUNKTIONALISIERTES ELASTOMER-ZUSAMMENSETZUNGEN, ZUR ERZEUGUNG VON BESCHICHTUNGEN

ELASTOMER FUNCTIONALISED BY CARBOXYLIC GROUPINGS OR GRAFT ESTERS, AND USE THEREOF FOR PRODUCING FUNCTIONALISED ELASTOMER/BITUMEN COMPOSITIONS SUITABLE FOR MAKING SURFACINGS

(84) Etats contractants désignés:
**AT BE CH DE DK ES FI FR GB GR IE IT LI LU MC NL PT SE**
Etats d'extension désignés:
**LT LV**

(30) Priorité: **19.10.1995 FR 9512275**

(43) Date de publication de la demande:
**08.10.1997 Bulletin 1997/41**

(73) Titulaire: **ELF AQUITAINE**
**92400 Courbevoie (FR)**

(72) Inventeurs:
- **NICOL, Pascal**
  **F-64000 Pau (FR)**
- **PLANCHE, Jean-Pascal**
  **F-38540 Saint-Just-Chaleyssin (FR)**
- **GERMANAUD, Laurent**
  **F-38540 Heyrieux (FR)**
- **NABET, Hervé**
  **F-64000 Pau (FR)**
- **TURELLO, Patrick**
  **F-69340 Francheville (FR)**

(74) Mandataire: **Boillot, Marc**
**ELF AQUITAINE,**
**Division Propriété Industrielle,**
**Tour Elf**
**92078 Paris la Défense Cédex 45 (FR)**

(56) Documents cités:
**EP-A- 0 295 675**
**EP-A- 0 559 460**
**WO-A-94/22958**
**FR-A- 2 371 467**
**FR-A- 2 439 816**
**GB-A- 852 304**
**GB-A- 2 030 573**
**US-A- 2 419 943**
**US-A- 4 826 613**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 799 252 B1

## Description

L'invention a trait à un procédé de préparation de compositions bitume/élastomère fonctionnalisé à large intervalle de plasticité, faisant appel à un élastomère fonctionnalisé par des groupements carboxyliques ou esters portés par des séquences greffées de longueur contrôlée. Elle se rapporte également à l'application des compositions bitume/élastomère fonctionnalisé obtenues à la réalisation de revêtements et notamment de revêtements superficiels routiers, d'enrobés ou encore de revêtements d'étanchéité. Elle concerne enfin un procédé de préparation dudit élastomère fonctionnalisé.

On connaît des compositions bitume/élastomère fonctionnalisé consistant en un mélange d'un ou plusieurs bitumes, d'un élastomère fonctionnalisé porteur de groupements fonctionnels acides carboxyliques ou dérivés, par exemple esters ou anhydrides d'acides carboxyliques, et éventuellement d'un agent salifiant susceptible de réagir avec les groupements fonctionnels de l'élastomère fonctionnalisé et ainsi de conduire à la formation de pontages entre les chaînes macromoléculaires de l'élastomère fonctionnalisé (US-A-5189083, US-A-5214082, US-A-5278207 et EP-A-0548412).

L'élastomère fonctionnalisé peut consister en un copolymère bloc de styrène et d'un diène conjugué tel que butadiène ou isoprène, qui renferme en outre au moins un bloc dérivant d'un monomère acrylique susceptible de fournir des groupements fonctionnels acides carboxyliques par hydrolyse (US-A-5189083, US-A-5214082 et US-A-5278207), ou bien il peut être constitué d'un copolymère bloc de styrène et d'un diène conjugué tel que butadiène ou isoprène portant des chaînes greffées renfermant des groupements fonctionnels acides carboxyliques ou anhydrides carboxyliques (US-A-5278207 et EP-A-0548412).

L'agent salifiant peut être choisi parmi les amines, les sels d'ammonium quaternaire, les oxydes et hydroxydes métalliques, les carbonates alcalins ou alcalino-terreux, les carboxylates métalliques, les alcools, les aminoalcools et les époxydes (EP-A-0548412). En particulier, l'agent salifiant peut être pris parmi les amines polyfonctionnelles ayant au moins deux groupements fonctionnels amino (US-A-5278207).

Les élastomères fonctionnalisés par des groupements acides carboxyliques ou dérivés, utilisés pour produire les compositions bitume/élastomère fonctionnalisé des citations mentionnées ci-dessus, ne possèdent qu'un taux limité de groupements fonctionnels carboxyliques ou dérivés fixés le long des chaînes macromoléculaires de l'élastomère et susceptibles d'induire des réticulations ou pontages desdites chaînes entre elles ou/et avec le bitume, directement ou après addition de l'agent salifiant. De ce fait, les caractéristiques physicomécaniques des compositions bitume/élastomère fonctionnalisé obtenues, notamment intervalle de plasticité (différence entre la température de ramollissement bille et anneau et le point de fragilité Fraass) et caractéristiques mécaniques aux basses températures d'utilisation, ne sont pas entièrement satisfaisantes.

Selon l'invention, on propose de préparer des compositions bitume/élastomère fonctionnalisé en faisant appel à un élastomère fonctionnalisé par des groupements fonctionnels carboxyliques ou esters greffés, qui présente un indice de polydispersité très voisin de celui de l'élastomère non fonctionnalisé correspondant et une distribution améliorée des groupements fonctionnels le long des chaînes macromoléculaires de l'élastomère, ce qui permet d'obtenir des compositions bitume/élastomère fonctionnalisé présentant un intervalle de plasticité élargi ainsi que des caractéristiques mécaniques améliorées en traction.

L'invention a donc pour objet un procédé de préparation de compositions bitume/élastomère fonctionnalisé à large intervalle de plasticité, dans lequel on incorpore, à une composante bitumineuse, un élastomère fonctionnalisé comportant un élastomère substrat, ayant une masse moléculaire moyenne en poids $(\overline{M}w)_0$ comprise entre 10000 et 600000 daltons et un indice de polydispersité inférieur à 5, sur lequel sont greffées, en quantité représentant 0,1 à 10 % en poids du substrat, des séquences portant des groupements fonctionnels carboxyliques ou esters, la quantité dudit élastomère fonctionnalisé représentant 0,5% à 25% du poids de la composante bitumineuse, ledit procédé se caractérisant en ce qu'on utilise un élastomère fonctionnalisé qui possède une masse moléculaire moyenne en poids $\overline{M}w$ telle que le rapport

$$\frac{\left|\overline{M}w-(\overline{M}w)_0\right|}{(\overline{M}w)_0}$$

ait une valeur inférieure à 20 % et dont les séquences greffées sur le substrat répondent à la formule

$$-S-R_1-(COOX)_x,$$
$$(SH)_z$$

dans laquelle $R_1$ désigne un radical hydrocarboné (x+z+1)-valent en $C_1$ à $C_{12}$, X représente H ou un radical monovalent hydrocarboné R en $C_1$ à $C_{12}$, z est égal à zéro ou 1 et x est un nombre entier ayant une valeur allant de 1 à 3 avec $x+z \leq 3$.

Avantageusement, le rapport

$$\frac{\left|\overline{M}w-(\overline{M}w)_0\right|}{(\overline{M}w)_0}$$

est inférieur à 12 %.En outre, dans la formule des séquences précitées

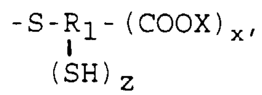

le nombre x est de préférence égal à 1 ou 2.

Avantageusement, les séquences greffées sur le substrat élastomère répondent à la formule $-S-R_3-(COOX)_x$, où X et x ont les significations précitées et $R_3$ désigne un radical hydrocarboné (x+1)-valent en $C_1$ à $C_{12}$ et de préférence en $C_1$ à $C_8$, lesdites séquences ayant notamment la formule $-S-R_3-(COOH)_x$.

Dans les formules précitées des séquences greffées sur le substrat élastomère, le radical hydrocarboné (x+z+1)-valent $R_1$, le radical (x+1)-valent $R_3$ et le radical hydrocarboné monovalent R peuvent représenter chacun un radical aliphatique saturé, linéaire ou ramifié, en $C_1$ à $C_{12}$, de préférence en $C_1$ à $C_8$, un radical aliphatique insaturé, linéaire ou ramifié, en $C_2$ à $C_{12}$, de préférence en $C_2$ à $C_8$, un radical cycloaliphatique en $C_4$ à $C_{12}$, de préférence en $C_6$ à $C_8$, ou un radical aromatiques en $C_6$ à $C_{12}$, de préférence en $C_6$ à $C_8$. De préférence, le radical R est un radical alkyle, linéaire ou ramifié, en $C_1$ à $C_{12}$ et plus spécialement en $C_1$ à $C_8$ tel que, par exemple, méthyle, éthyle, propyle, butyle, isooctyle, éthyle-2 hexyle, n-octyle.

A titre d'exemples de séquences répondant aux formules données plus haut, que l'on peut greffer sur le substrat élastomérique pour former un élastomère fonctionnalisé selon l'invention, on peut citer les séquences pour lesquelles dans les formules précitées X est un atome d'hydrogène, notamment $-S-CH_2-COOH$, $-S-CH_2-CH_2-COOH$, $-S-CH_2-CH_2-CH_2-COOH$,

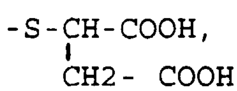

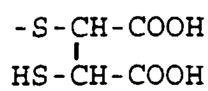 et 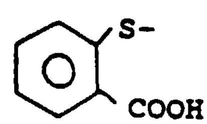

ainsi que les séquences correspondantes pour lesquelles le groupement -COOH est remplacé par un groupement ester -COOR', où R' est un alkyle en $C_1$ à $C_{12}$ et en particulier en $C_1$ à $C_8$ comme, par exemple, méthyle, éthyle, propyle, butyle, éthyle-2 hexyle, n-octyle, isooctyle.

L'élastomère, qui forme le substrat de l'élastomère fonctionnalisé selon l'invention, peut être tel que polyisoprène, polynorbornène, polybutadiène, caoutchouc butyle, copolymère statistique éthylène/propylène (EP), terpolymère statistique éthylène/propylène/diène (EPDM). Avantageusement, ledit élastomère est choisi parmi les copolymères statistiques ou séquencés de styrène et d'un diène conjugué, notamment butadiène, isoprène, chloroprène, butadiène carboxylé ou isoprène carboxylé, et plus particulièrement consiste en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé ou encore de styrène et d'isoprène carboxylé. Le copolymère de styrène et de diène conjugué, et en particulier chacun des copolymères précités, possède avantageusement une teneur pondérale en styrène allant de 5 % à 50 %.

La masse moléculaire moyenne en poids $(\overline{M}w)_0$ de l'élastomère substrat et notamment celle du polymère de styrène et de diène conjugué et tout particulièrement celle des copolymères mentionnés ci-dessus, est comprise, comme indiqué plus haut, entre 10000 et 600000 daltons et se situe de préférence entre 30000 et 400000 daltons.

L'indice de polydispersité de l'élastomère substrat $IP_0$, c'est-à-dire le rapport de la masse moléculaire moyenne en poids $(\overline{M}w)_0$ dudit substrat à sa masse moléculaire moyenne en nombre $(\overline{M}n)_0$, est, comme indiqué précédemment, inférieur à 5 et se situe de préférence entre 1 et 3.

De préférence l'élastomère substrat de l'élastomère fonctionnalisé, consiste en un copolymère de styrène et

de diène conjugué choisi parmi les copolymères di- ou triséquencés, avec ou sans charnière statistique, de styrène et de butadiène, de styrène et d'isoprène, de styrène et de butadiène carboxylé ou encore de styrène et d'isoprène carboxylé qui ont des teneurs pondérales en styrène, des masses moléculaires moyennes en poids $(\overline{M}w)_0$ et des valeurs d'indice de polydispersité $IP_0$ situées dans les intervalles définis précédemment.

Avantageusement, l'élastomère fonctionnalisé renferme une proportion de séquences greffées représentant 0,1 à 6 % et de préférence 0,3 à 3 % en poids de l'élastomère substrat.

De préférence, la quantité d'élastomère fonctionnalisé présente dans la composition bitume/élastomère fonctionnalisé représente 1% à 15% du poids de la composante bitumineuse.

La composante bitumineuse, que l'on utilise pour former la composition bitume/élastomère fonctionnalisé, peut consister en un ou plusieurs bitumes qui possèdent une viscosité cinématique à 100°C comprise entre $0,5x10^{-4}$ $m^2/s$ et $3x10^{-2}$ $m^2/s$ et de préférence entre $1x10^{-4}$ $m^2/s$ et $2x10^{-2}$ $m^2/s$. Ces bitumes peuvent être des bitumes de distillation directe ou de distillation sous pression réduite ou encore des bitumes soufflés ou semi-soufflés, des résidus de désasphaltage au propane ou au pentane, voire même certaines coupes pétrolières ou des mélanges de bitumes et de distillats sous vide ou encore des mélanges d'au moins deux des produits venant d'être énumérés. Avantageusement, la composante bitumineuse entrant dans la formulation de la composition bitume/élastomère fonctionnalisé, outre une viscosité cinématique comprise dans les intervalles précités, présente une pénétrabilité à 25°C, définie suivant la norme NF T 66004, comprise entre 5 et 800 et de préférence entre 10 et 400.

L'incorporation de l'élastomère fonctionnalisé à la composante bitumineuse est réalisée par malaxage des ingrédients, en opérant à des températures comprises entre 100°C et 230°C et plus particulièrement entre 120°C et 190°C, pendant une durée suffisante, généralement de l'ordre de quelques dizaines de minutes à quelques heures et, par exemple, de l'ordre de 30 minutes à 8 heures, pour former un mélange homogène, lequel mélange constitue la composition bitume/élastomère fonctionnalisé.

Ledit mélange peut être avantageusement additionné, en opérant sous agitation à des températures comprises entre 100°C et 230°C et plus particulièrement entre 120°C et 190°C, d'un ou plusieurs additifs susceptibles de réagir avec les groupements fonctionnels carboxyliques portés par l'élastomère fonctionnalisé pour activer ou renforcer la réticulation des chaînes macromoléculaires de l'élastomère entre elles ou/et avec la composante bitumineuse et ainsi renforcer les caractéristiques physicomécaniques de la composition bitume/élastomère fonctionnalisé. Selon l'invention, il est également possible de faire réagir tout d'abord l'élastomère fonctionnalisé avec l'additif réactif ou les additifs réactifs, puis d'incorporer le produit de réaction obtenu à la composante bitumineuse. Ces additifs réactifs peuvent être en particulier des amines, notamment polyamines, primaires ou secondaires, des alcools, des aminoalcools, des époxydes ou encore des composés métalliques.

Des additifs réactifs du type amine sont, par exemple, des diamines aromatiques telles que diamino-1, 4 benzène, diamino-2, 4 toluène, diaminonaphtalène, bis(amino-4 phényl) sulfone, bis (amino-4 phényl) éther, bis (amino-4 phényl) méthane, des diamines aliphatiques ou cycloaliphatiques telles que celles de formule $H_2N\text{-}R_7\text{-}NH_2$ où $R_7$ désigne un radical alkylène en $C_2$ à $C_{12}$ ou cycloalkylène en $C_6$ à $C_{12}$, par exemple éthylènediamine, diaminopropane, diaminobutane, diaminohexane, diaminooctane, diaminodécane, diaminododécane, diaminocyclohexane, diaminocyclooctane, diaminocyclododécane, des polyéthylènepolyamines ou polypropylènepolyamines telles que diéthylènetriamine, triéthylènetétramine, tétraéthylènepentamine, dipropylènetriamine, ou encore des amines ou polyamines grasses, c'est-à-dire des amines ou polyamines renfermant un radical alkyle ou alkényle de $C_{12}$ à $C_{18}$ relié à l'atome d'azote d'un groupe amine.

Des additifs réactifs du type alcool sont, en particulier, des polyols tels que diols ou triols et notamment des diols de formule $HO\text{-}R_8\text{-}OH$, où $R_8$ désigne un radical hydrocarboné, notamment un radical alkylène en $C_2$ à $C_{18}$, arylène en $C_6$ à $C_8$ et cycloalkylène en $C_6$ à $C_8$, et des polyétherdiols de formule $HO{+}C_q H_{2q} O{+}_r H$ où q est un nombre allant de 2 à 6 et notamment égal à 2 ou 3 et r est un nombre au moins égal à 2 et par exemple allant de 2 à 20. Des exemples de tels polyols sont tels que éthylène glycol, propylène glycol, butylène glycol, diéthylène glycol, triéthylène glycol, tétraéthylène glycol, hexanediol, octane diol, polybutadiène polyhydroxylé.

Des additifs réactifs du type composé métallique sont, en particulier, des composés tels que hydroxydes, oxydes, alcoolates, carboxylates comme formiates et acétates, méthoxydes, éthoxydes, nitrites, carbonates et bicarbonates de métaux des groupes I, II, III et VIII du Tableau Périodique des Eléments, notamment Na, K, Li, Mg, Ca, Cd, Zn, Ba, Al, Fe.

La quantité de l'additif réactif ou des additifs réactifs, que l'on incorpore à la composition bitume/élastomère fonctionnalisé, peut aller de 0,01 % à 10 % et plus particulièrement de 0,05 % à 5 % du poids de la composante bitumineuse présente dans ladite composition. Avantageusement, ladite quantité est comprise entre une fois et quatre fois la quantité stoechiométrique correspondant à une réaction complète de l'additif réactif ou des additifs réactifs avec les groupements fonctionnels portés par l'élastomère fonctionnalisé.

En cours de production ou après avoir été produite, la composition bitume/élastomère fonctionnalisé peut être encore additionnée, en opérant sous agitation à des températures comprises entre 100°C et 230°C et plus particulièrement entre 120°C et 190°C, de 1 % à 40 % et plus spécialement de 2 % à 30 %, en poids de la composante

bitumineuse, d'un agent fluxant, qui peut consister, notamment, en une huile hydrocarbonée présentant un intervalle de distillation à pression atmosphérique, déterminé suivant la norme ASTM D 86-67, compris entre 100°C et 600°C et situé plus particulièrement entre 150°C et 400°C. Cette huile hydrocarbonée, qui peut être notamment une coupe pétrolière de caractère aromatique, une coupe pétrolière de caractère naphténo-aromatique, une coupe pétrolière de caractère naphténo-paraffinique, une coupe pétrolière de caractère paraffinique, une huile de houille ou encore une huile végétale, est suffisamment "lourde" pour limiter l'évaporation au moment de son addition à la composante bitumineuse et en même temps suffisamment "légère" pour être éliminée au maximum après répandage de la composition bitume/élastomère fonctionnalisé la contenant, de manière à retrouver les mêmes propriétés mécaniques qu'aurait présentées, après répandage à chaud, la composition bitume/élastomère fonctionnalisé préparée sans utiliser d'agent fluxant. La quantité d'agent fluxant est choisie dans les intervalles définis plus haut, pour être compatible avec l'usage final désiré sur le chantier.

Outre les additifs réactifs et l'agent de fluxage, on peut encore incorporer à la composition bitume/élastomère fonctionnalisé, au cours de la production de ladite composition ou après qu'elle ait été produite, des additifs conventionnellement utilisés'dans les compositions à base de composante bitumineuse et de polymères, tels que des promoteurs d'adhésion de la composition bitume/élastomère fonctionnalisé aux surfaces minérales ou encore des charges comme le talc, le noir de carbone, les pneus usagés réduits en poudrette.

Dans une forme de mise en oeuvre utilisant une huile hydrocarbonée telle que définie plus haut, à titre d'agent fluxant incorporé à la composition bitume/élastomère fonctionnalisé, l'élastomère fonctionnalisé est incorporé à la composante bitumineuse sous la forme d'une solution mère dans l'huile hydrocarbonée formant l'agent fluxant.

La solution mère est préparée par mise en contact des ingrédients la composant, à savoir huile hydrocarbonée servant de solvant et élastomère fonctionnalisé, sous agitation à des températures comprises entre 10°C et 170°C et plus particulièrement entre 40°C et 120°C, pendant une durée suffisante, par exemple d'environ 30 minutes à environ 90 minutes, pour obtenir une dissolution complète de l'élastomère fonctionnalisé.

La concentration de l'élastomère fonctionnalisé dans la solution mère peut varier assez largement en fonction, notamment, de la nature de l'huile hydrocarbonée utilisée pour dissoudre l'élastomère fonctionnalisé. Ainsi, la quantité d'élastomère fonctionnalisé peut représenter, notamment, 5 à 40 % et plus particulièrement 10 à 30 % du poids de l'huile hydrocarbonée.

Pour préparer la composition bitume/élastomère fonctionnalisé en faisant appel à la technique de la solution mère, on mélange la solution mère renfermant l'élastomère fonctionnalisé avec la composante bitumineuse, en opérant à des températures comprises entre 100°C et 230°C, plus particulièrement entre 120°C et 190°C, et sous agitation jusqu'à l'obtention d'une masse homogène. La durée de mélange peut aller, par exemple, de 10 minutes à 90 minutes. La quantité de la solution mère mélangée à la composante bitumineuse est choisie pour fournir la quantité désirée d'élastomère fonctionnalisé par rapport à ladite composante bitumineuse, cette quantité étant située dans les fourchettes définies précédemment.

Les compositions bitume/élastomère fonctionnalisé obtenues selon l'invention peuvent être utilisées telles quelles ou bien diluées avec des proportions variables d'un bitume ou mélange de bitumes ou d'une composition selon l'invention ayant des caractéristiques différentes pour former des liants bitume/élastomère fonctionnalisé ayant des teneurs choisies en élastomère fonctionnalisé. Ces teneurs peuvent être soit égales (compositions non diluées) aux teneurs en élastomère fonctionnalisé des compositions bitume/élastomère fonctionnalisé initiales correspondantes, soit différentes (compositions diluées) de ces dernières teneurs. La dilution des compositions bitume/élastomère fonctionnalisé selon l'invention avec un bitume ou mélange de bitumes ou avec une composition selon l'invention de caractéristiques différentes peut être réalisée soit directement à la suite de l'obtention desdites compositions, lorsqu'une utilisation quasi immédiate des liants bitume/élastomère fonctionnalisé résultants est requise, ou bien encore après une durée de stockage plus ou moins prolongée des compositions bitume/élastomère fonctionnalisé, lorsqu'une utilisation différée des liants bitume/élastomère fonctionnalisé résultants est envisagée. Le bitume ou mélange de bitumes utilisé pour la dilution d'une composition bitume/élastomère fonctionnalisé selon l'invention peut être choisi parmi les bitumes définis précédemment comme convenant à l'obtention des compositions bitume/élastomère fonctionnalisé.

La dilution d'une composition bitume/élastomère fonctionnalisé selon l'invention par un bitume ou mélange de bitumes ou par une seconde composition selon l'invention à teneur plus faible en élastomère fonctionnalisé, pour former un liant bitume/élastomère fonctionnalisé à teneur choisie en élastomère fonctionnalisé inférieure à celle de la compositon bitume/élastomère fonctionalisé à diluer, est généralement réalisée en mettant en contact, sous agitation et à des températures comprises entre 100°C et 230°C et plus particulièrement entre 120°C et 190°C, des proportions appropriées de la composition bitume/élastomère fonctionnalisé à diluer et de bitume ou mélange de bitumes ou de seconde composition bitume/élastomère fonctionnalisé.

Les liants bitume/élastomère fonctionnalisé consistant en les compositions bitume/élastomère fonctionnalisé selon l'invention ou résultant de la dilution desdites compositions, par un bitume ou mélange de bitumes ou par une autre composition bitume/élastomère fonctionnalisé selon l'invention, jusqu'à la teneur désirée en élastomère fonctionnalisé dans lesdits liants, sont applicables, directement ou après mise en émulsion aqueuse, à la réalisation de

revêtements routiers du type enduit superficiel, à la production d'enrobés mis en place à chaud ou à froid, ou encore à la réalisation de revêtements d'étanchéité.

L'élastomère fonctionnalisé, utilisé selon l'invention, est obtenu avantageusement par un procédé de greffage, qui consiste à mettre en contact, jusqu'à la formation de l'élastomère fonctionnalisé, (i) un élastomère substrat tel que défini précédemment, ayant une masse moléculaire moyenne en poids $(\overline{M}w)_0$ comprise entre 10000 et 600000 daltons et plus particulièrement entre 30000 et 400000 daltons et un indice de polydispersité inférieur à 5 et de préférence compris entre 1 et 3, avec (ii) un précurseur des séquences à fonctionnalité carboxylique ou ester consistant en au moins un composé de formule

$$(XOOC)_x-\underset{\underset{(SH)_z}{|}}{R_1}-S-Y,$$

dans laquelle Y désigne un atome d'hydrogène ou un reste monovalent

$$-S-\underset{\underset{(SH)_z}{|}}{R_1}-(COOX)_x,$$

chacun des symboles X, $R_1$, z et x ayant la signification donnée précédemment, la quantité de précurseur représentant 0,5% à 25 % et de préférence 1 % à 15 % du poids de l'élastomère substrat, ladite mise en contact étant réalisée en opérant en masse ou dans un milieu solvant ou/et diluant, à des températures comprises entre 40°C et 250°C, et en présence de 0,1 % à 1,5 % et de préférence de 0,1 % à 1 %, en poids de l'élastomère substrat, d'un phénol bloqué et de 0 % à 2 % et de préférence de 0 % à 1,5 %, en poids de l'élastomère substrat, d'un triphosphite de dialkylphényle.

Avantageusement, le précurseur des séquences greffées consiste en au moins un composé ayant la formule $Y_1$-S-$R_3$-$(COOX)_x$, où $Y_1$ désigne H ou un reste monovalent -S-$R_3$-$(COOX)_x$, et notamment la formule $Y_2$-S-$R_3$-$(COOH)_x$, où $Y_2$ représente H ou un reste monovalent -S-$R_3$-(COOH)x, les symboles $R_3$, X et x ayant chacun la signification donnée précédemment.

La présence du phénol bloqué seul ou de l'association phénol bloqué/triphosphite de dialkylphényle dans le milieu réactionnel de greffage, empêche la réticulation de l'élastomère substrat au cours de l'opération de greffage. Lorsque le milieu réactionnel de greffage renferme à la fois un phénol bloqué et un triphosphite de dialkylphényle, la quantité pondérale de triphosphite est de préférence au moins égale et plus spécialement supérieure à celle du phénol bloqué.

Avantageusement, le phénol bloqué est choisi parmi les composés répondant à la formule

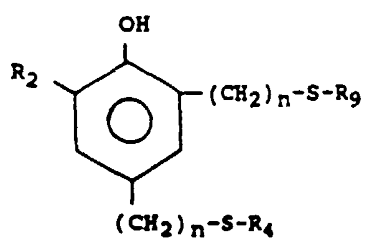

dans laquelle les symboles $R_2$, $R_3$ et $R_4$, identiques ou différents, représentent des radicaux hydrocarbonés aliphatiques monovalents en $C_1$ à $C_{18}$ et plus particulièrement en $C_1$ à $C_{12}$, tout spécialement méthyle et t-butyle pour $R_2$ et hexyle, heptyle, nonyle et tout particulièrement octyle pour $R_9$ et $R_4$ et n est un nombre de O à 5. Quant au triphosphite de dialkylphényle, il est plus particulièrement choisi parmi les composés répondant à la formule

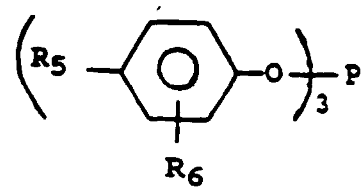

dans laquelle les symboles $R_5$ et $R_6$, identiques ou différents, représentent H ou des radicaux hydrocarbonés aliphatiques monovalents en $C_1$ à $C_{18}$ et plus particulièrement en $C_1$ à $C_{12}$, tout spécialement H, isopropyle, t-butyle pour $R_5$ et H, t-butyle, hexyle, heptyle, octyle, nonyle pour $R_6$.

Si besoin est, pour faciliter la fixation des séquences à greffer, générées par le composé précurseur de ces séquences, sur l'élastomère substrat, on peut ajouter, au milieu réactionnel de greffage, un initiateur radicalaire générant des radicaux libres aux températures, comprises entre 40°C et 250°C, choisies pour le greffage, lequel initiateur radicalaire est notamment un composé peroxydé et, par exemple, un peroxyde de dihydrocarbyle comme le peroxyde de lauroyle, le peroxyde de benzoyle, le peroxyde de dicumyle ou encore de peroxyde de ditertiobutyle. La quantité d'initiateur radicalaire peut varier assez largement et peut représenter, par exemple, 0,01 % à 6 % et plus particulièrement 0,05 % à 3 % en poids de l'élastomère substrat.

Comme indiqué plus haut, le greffage peut être mis en oeuvre en masse, c'est-à-dire en l'absence de tout solvant ou diluant, ou au contraire dans un milieu solvant ou/et diluant. L'élastomère substrat peut donc représenter avantageusement 10 % à 100 % et de préférence 15 % à 100 % du poids global d'élastomère substrat et de milieu solvant et/ou diluant. Ledit milieu solvant ou/et diluant, dans lequel on peut mettre en oeuvre la réaction de greffage, peut consister en tout liquide sans action sur les composants participant à la réaction de greffage et il peut être choisi, par exemple, parmi les hydrocarbures, notamment hydrocarbures aromatiques tels que l'éthylbenzène, liquides aux températures choisies pour le greffage.

La durée de la réaction de greffage peut varier de quelques minutes, par exemple 5 à 10 minutes, à plusieurs heures, par exemple 4 à 5 heures.

Lorsque la réaction de greffage est réalisée en opérant dans un milieu solvant et/ou diluant, l'élastomère fonctionnalisé résultant du greffage est séparé dudit milieu par toute technique connue dans ce but et par exemple, par une technique comportant une dilution du milieu réactionnel issu du greffage suivie d'une précipitation du milieu dilué dans un liquide précipitant tel que l'acétone.

Avantageusement, lorsque le précurseur des séquences greffées est un composé thiol ayant la formule

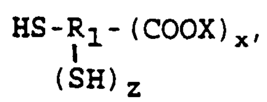

plus particulièrement la formule $HS\text{-}R_3\text{-}(COOX)_x$ et notamment la formule $HS\text{-}R_3\text{-}(COOH)_x$, la réaction de greffage est mise en oeuvre en opérant à des températures comprises entre 40°C et 150°C dans un milieu solvant et/ou diluant ou en masse. Lorsque le précurseur des séquences greffées est un composé disulfure ayant la formule

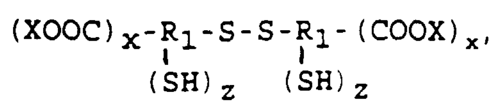

plus particulièrement la formule $(XOOC)_x\text{-}R_3\text{-}S\text{-}S\text{-}R_3\text{-}(COOX)_x$ et notamment la formule $(HOOC)_x\text{-}R_3\text{-}S\text{-}S\text{-}R_3\text{-}(COOH)_x$, on préfère mettre en oeuvre la réaction de greffage en masse à des températures comprises entre 150°C et 250°C et tout particulièrement en l'absence d'initiateur radicalaire.

A titre d'exemples de composés précurseurs des séquences greffées, on peut citer :

(i) les composés thiols tels que l'acide thiolacétique (acide thioglycolique) de formule $HS\text{-}CH_2\text{-}COOH$, l'acide thiolpropionique de formule $HS\text{-}CH_2\text{-}CH_2\text{-}COOH$, l'acide thiolbutanoique de formule $HS\text{-}CH_2\text{-}CH_2\text{-}CH_2\text{-}COOH$, l'acide mercaptosuccinique de formule

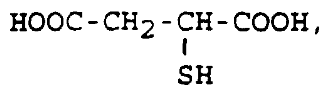

l'acide dimercaptosuccinique de formule

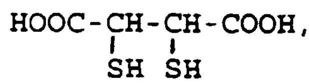

l'acide thiosalicylique de formule

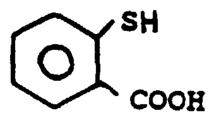

(ii) les composés disulfures tels que l'acide dithio-2,2'-diacétique de formule $HOOC-CH_2-S-S-CH_2-COOH$, l'acide dithio-3,3'-dipropionique de formule $HOOC-CH_2-CH_2-S-S-CH_2-CH_2-COOH$, l'acide dithio-4,4'-butanoique de formule $HOOC-(CH_2)_3-S-S-(CH_2)_3-COOH$ et l'acide dithio-2-2'-disalicylique de formule

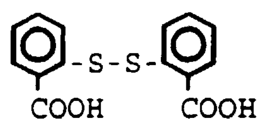 ,

ainsi que

(iii) les esters dérivant desdits acides exemplifiés ci-dessus, par remplacement des groupements fonctionnels -COOH par des groupements fonctionnels esters -COOR', où R est un radical alkyle en $C_1$ à $C_{12}$ et plus particulièrement en $C_1$ à $C_8$ comme, par exemple, méthyle, éthyle, propyle, butyle, éthyle-2 hexyle, n-octyle, isooctyle.

L'invention est illustrée par les exemples suivants.

Dans ces exemples, les quantités et pourcentages sont exprimés en poids, sauf indications contraires.

En outre, les caractéristiques rhéologiques et mécaniques des composantes bitumineuses ou des compositions bitume/élastomère fonctionnalisé auxquelles on fait référence dans certains desdits exemples sont les suivantes :

- pénétrabilité, exprimée en 1/10 de mm et déterminée selon la norme NF T 66004 ;
- température de ramollissement bille et anneau, exprimée en °C et déterminée par l'essai bille et anneau défini par la norme NF T 66008 ;
- caractéristiques rhéologiques en traction déterminées selon la norme NF T 46002 et comportant les grandeurs :
  - élongation à la rupture $\varepsilon_r$ en %,
  - contrainte à la rupture $\sigma_r$ en daN/cm$^2$,
- indice de PFEIFFER (en abrégé IPF) calculé par la relation $IPF = \frac{20-500\ A}{1+50\ A}$ avec $A = \frac{\log_{10} 800 - \log_{10} pen}{TBA - 25}$ où "pen" et "TBA" désignent respectivement la pénétrabilité et la température bille et anneau, telles que définies plus haut, cet indice fournissant une indication de la susceptibilité thermique de la composition.

EXEMPLE 1

Synthèse d'un élastomère dibloc styrène/butadiène à fonctionnalité carboxylique greffée apportée par greffage d'acide thiolacétique réalisé en solution.

On opérait dans un réacteur de trois litres en acier inoxydable, équipé d'un agitateur ruban et de moyens de

contrôle de la température.

Dans le réacteur, maintenu sous atmosphère d'azote, on introduisait, en opérant à 20°C, 281 parties d'un élastomère consistant en un copolymère séquencé dibloc styrène/butadiène en solution dans 1125 parties d'éthylbenzène, ledit copolymère renfermant 25 % de styrène et possédant une masse moléculaire moyenne en poids $(\overline{M}w)_0$ égale à 144000.

Au contenu du réacteur, on ajoutait alors 17,9 parties d'acide thiolacétique ($HS\text{-}CH_2\text{-}COOH$), puis 1,4 partie d'un phénol bloqué de formule

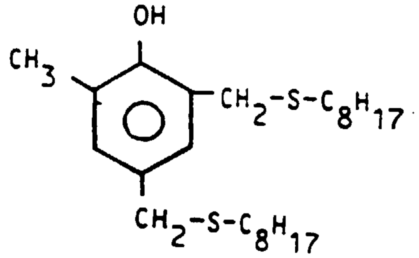

(produit commercialisé par CIBA sous le nom IRGANOX 1520) et 1,7 partie du triphosphite de formule

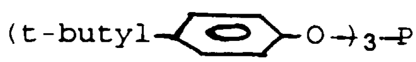

(produit commercialisé par CIBA sous le nom IRGAFOS 168).

La charge du réacteur était alors portée à 92°C sous agitation (200 tours/minute) et sous une pression d'azote égale à 2 bars, après quoi on lui ajoutait 6 parties d'une solution de peroxyde de benzoyle à 10 % dans le toluène, puis après une heure trois autres parties de ladite solution.

Après la seconde addition de peroxyde de benzoyle, le contenu du réacteur était encore maintenu à la température de 92°C pendant trois heures.

A l'issue de cette période, le milieu réactionnel était refroidi et le produit greffé était ensuite récupéré par évaporation sous vide dudit milieu réactionnel refroidi.

On obtenait un élastomère greffé consistant en un copolymère séquencé dibloc styrène/butadiène renfermant 25 % de styrène et porteur de séquences greffées $\text{-}S\text{-}CH_2\text{-}COOH$ en quantité, déterminée par spectroscopie infrarouge, représentant 0,92 % du copolymère séquencé dibloc. La masse moléculaire moyenne en poids Mw dudit élastomère greffé était égale à 138000 (rapport

$$\frac{\left|\overline{M}w-(\overline{M}w)_0\right|}{(\overline{M}w)_0}$$

égal à 4,2 %) et sa teneur en gel inférieure à 1 %, ce qui atteste d'une très faible dégradation lors du greffage.

<u>EXEMPLE 2</u>

<u>Synthèse d'un élastomère dibloc styrène/butadiène à fonctionnalité carboxylique greffée apportée par greffage d'acide thiolpropionique réalisé en solution</u>.

On opérait comme décrit dans l'exemple 1, en remplaçant toutefois l'acide thiolacétique par 20,6 parties d'acide thiolpropionique ($HS\text{-}CH_2\text{-}CH_2\text{-}COOH$).

On obtenait un élastomère greffé consistant en un copolymère séquencé dibloc styrène/butadiène renfermant 25 % de styrène et porteur de séquences greffées $\text{-}S\text{-}CH_2\text{-}CH_2\text{-}COOH$ en quantité, déterminée par spectroscopie infrarouge, représentant 1,1 % du copolymère séquencé dibloc. La masse moléculaire moyenne en poids $\overline{M}w$ dudit élastomère greffé était égale à 139000 (rapport

$$\frac{\left|\overline{M}w-(\overline{M}w)_0\right|}{(\overline{M}w)_0}$$

égal à 3,5 %) et sa teneur en gel inférieure à 1 %.

EXEMPLE 3

Synthèse d'un élastomère dibloc styrène/butadiène à fonctionnalité carboxylique greffée apportée par greffage d'acide dithiodipropionique réalisé en masse.

On opérait dans une cuve de malaxage à rotors du type BRABENDER (RHEOMIX 600) maintenue à 180°C et sous atmosphère d'azote pendant toute la durée des opérations.

Dans la cuve de malaxage, on introduisait 50 parties d'un élastomère consistant en un copolymère séquencé dibloc identique à celui utilisé dans les exemples 1 et 2, ledit copolymère séquencé étant antioxydé par 0,25 partie du phénol bloqué IRGANOX 1520 et 0,3 partie du triphosphite IRGAFOS 168. On imposait alors à la masse présente dans la cuve, une vitesse de malaxage correspondant à une vitesse de rotation des rotors de cette cuve égale à 32 tours/minute et ajoutait à ladite masse 1,5 partie d'acide dithiodipropionique ($HOOC-CH_2-CH_2-S-S-CH_2-CH_2-COOH$), puis effectuait un malaxage du contenu de la cuve pendant 30 minutes à 180°C.

A l'issue de cette période, le produit greffé était extrait de la cuve de malaxage, puis refroidi.

On obtenait un élastomère greffé consistant en un copolymère séquencé dibloc styrène/butadiène renfermant 25 % de styrène et porteur de séquences greffées $-S-CH_2-CH_2-COOH$ en quantité, déterminé par spectroscopie infrarouge, représentant 0,45 % du copolymère séquencé dibloc. La masse moléculaire en poids $\overline{M}w$ dudit élastomère greffé était égale à 154 500 (rapport

$$\frac{\left|\overline{M}w-(\overline{M}w)_0\right|}{(\overline{M}w)_0}$$

égal à 7,3 %). Ledit élastomère greffé présentait une excellente solubilité dans les solvants usuels, par exemple éthylbenzène, la solution obtenue étant exempte de gels.

EXEMPLE 4

Synthèse d'un élastomère dibloc styrène/butadiène à fonctionnalité carboxylique greffée apportée par greffage d'acide dithiodipropionique réalisé en masse.

On opérait comme décrit dans l'exemple 3, avec en plus addition d'une quantité supplémentaire d'acide dithiodipropionique dans la cuve de malaxage, 15 minutes après avoir introduit la première quantité, ladite quantité supplémentaire étant aussi égale à 1,5 partie.

On obtenait un élastomère greffé consistant en un copolymère séquencé dibloc styrène/butadiène renfermant 25 % de styrène et porteur de séquences greffées $-S-CH_2-CH_2-COOH$ en quantité, déterminée par spectroscopie infrarouge, représentant 0,89 % du copolymère séquencé dibloc. La masse moléculaire en poids $\overline{M}w$ dudit élastomère greffé était égale à 159 000 (rapport

$$\frac{\left|\overline{M}w-(\overline{M}w)_0\right|}{(\overline{M}w)_0}$$

égal à 10,4 %). Ledit élastomère greffé présentait une excellente solubilité dans les solvants usuels, par exemple éthylbenzène, la solution obtenue étant exempte de gels.

EXEMPLE 5

On préparait une composition bitume/élastomère témoin (essai 5.A) et des compositions bitume/élastomère

fonctionnalisé selon l'invention (essai 5.B à 5.F) pour en évaluer et comparer les caractéristiques physicomécaniques.
On opérait dans les conditions suivantes :

- Essai 5.A (témoin)

Préparation d'une composition bitume/élastomère non fonctionnalisé.

Dans un réacteur maintenu à 180°C et sous agitation, on introduisait 965 parties d'un bitume ayant une pénétrabilité à 25°C, déterminée selon les modalités de la norme NF T 66004, égale à 63 et 35 parties d'un copolymère séquencé dibloc de styrène et de butadiène à titre d'élastomère, ledit copolymère ayant une masse moléculaire moyenne en poids $\overline{M}w$ égale à 144000 daltons et renfermant 25 % de styrène. Après trois heures de mélange sous agitation à 180°C, on obtenait une masse homogène constituant la composition bitume/élastomère non fonctionnalisé.

- Essai 5.B (selon l'invention)

Préparation d'une composition bitume/élastomère fonctionnalisé (séquence fonctionnelle greffée ; $-S-CH_2-COOH$)

Dans un réacteur maintenu à 180°C et sous agitation, on introduisait 940 parties d'un bitume ayant une pénétrabilité à 25°C, déterminée selon les modalités de la norme NF T 66004, égale à 88 et 60 parties d'un élastomère à fonctionalité carboxylique greffée consistant en le copolymère greffé obtenu comme décrit dans l'exemple 1. Après six heures de mélange sous agitation à 180°C, on obtenait une masse homogène constituant la composition bitume/élastomère fonctionnalisé. Cette composition renfermait 6,4 % d'élastomère fonctionnalisé par rapport à la composante bitumineuse utilisée.

- Essai 5.C (selon l'invention)

Préparation d'une composition bitume/élastomère fonctionnalisé diluée (séquence fonctionnelle greffée ; $-S-CH_2-COOH$).

On préparait une composition bitume/élastomère fonctionnalisé à teneur élevée en élastomère fonctionnalisé, en opérant comme décrit dans l'essai 5.B.
La composition bitume/élastomère fonctionnalisé ainsi obtenue étant ensuite diluée avec le même bitume que celui utilisé dans l'exemple 5.B jusqu'à une teneur finale de 3,5 % en élastomère fonctionnalisé dans la composition diluée. L'opération de dilution était effectuée à 180°C et sous agitation pendant une durée égale à quatre heures.

- Essai 5.D (selon l'invention)

Préparation d'une composition bitume/élastomère fonctionnalisé diluée (séquence fonctionnelle greffée : $-S-CH_2-COOH$) neutralisée par un additif réactif du type polyamine.

On préparait une composition bitume/élastomère fonctionnalisé diluée en opérant comme décrit dans l'essai 5.C.
A la composition diluée obtenue, maintenue sous agitation à 180°C, on ajoutait 1,1 partie d'une amine grasse, à savoir N-suif amino-3 propyl-1 tétrahydropyrimidine, commercialisée par la société CECA sous le nom POLYRAM L200®, puis maintenait le tout sous agitation à 180°C pendant trois heures pour permettre à l'amine de neutraliser les fonctions carboxyliques de l'élastomère fonctionnalisé présent dans la composition.

- Essai 5.E (selon l'invention)

Préparation d'une composition bitume/élastomère fonctionnalisé (séquence fonctionnelle greffée : $-S-CH_2-CH_2-COOH$).

On opérait comme décrit dans l'essai 5.C, en remplaçant toutefois l'élastomère fonctionnalisé à séquences greffées $-S-CH_2-COOH$, par la même quantité pondérale de l'élastomère à séquences greffées $-S-CH_2-CH_2-COOH$ obtenu comme décrit dans l'exemple 4.

- Essai 5.F (selon l'invention)

Préparation d'une composition bitume/élastomère fonctionnalisé (séquence fonctionnelle greffée : $-S-CH_2-CH_2-COOH$) neutralisée par un additif réactif du type polyamine.

On préparait une composition bitume/élastomère fonctionnalisé en opérant comme décrit dans l'essai 5.E.
A la composition ainsi obtenue, on incorporait 0,64 partie de l'amine grasse POLYRAM L200®, en opérant comme indiqué dans l'essai 5.D, pour neutraliser les fonctions carboxyliques de l'élastomère fonctionnalisé présent dans la composition.
Pour la composition bitume/élastomère témoin de l'essai 5.A ainsi que pour les compositions bitume/élastomère fonctionnalisé obtenues selon l'invention, à savoir composition concentrée bitume/élastomère fonctionnalisé produite dans l'essai 5.B et compositions diluées bitume/élastomère fonctionnalisé produites dans les essais 5.C à 5.F, on a déterminé les caractéristiques suivantes :

- pénétrabilité à 25°C (Pén. 25),
- température de ramollissement bille et anneau (TBA),
- indice de PFEIFFER (IPF),
- caractéristiques rhéologiques en traction, à savoir :
  . contrainte à la rupture ($\sigma_r$)
  . élongation à la rupture ($\varepsilon_r$).

les résultats obtenus sont présentés dans le tableau donné ci-après :

TABLEAU

| Essai | 5.A | 5.B | 5.C | 5.D | 5.E | 5.F |
|---|---|---|---|---|---|---|
| Bitume initial (parties en poids) | 965 | 940 | 940 | 940 | 940 | 940 |
| Elastomère (parties en poids) | 35 | 60 | 60 | 60 | 60 | 60 |
| Séquence greffée sur l'élastomère :<br>- nature<br>- % de l'élastomère | | ATG<br>0,92 | ATG<br>0,92 | ATG<br>0,92 | ATP<br>0,89 | ATP<br>0,89 |
| Amine (partie en poids) | | | | 1,1 | | 0,64 |
| Bitume de dilution (parties en poids) | | | 774 | 774 | 774 | 774 |
| Pén. 25 (0,1 mm) | 68 | 50 | 61 | 48 | 60 | 45 |
| TBA (°C) | 52 | 67 | 55,4 | 59 | 59 | 65 |
| IPF | +0,06 | +3,3 | +0,57 | +0,73 | +1,30 | +1,71 |
| Traction à 20°C<br>$\sigma_r$ (daN/cm$^2$)<br>$\varepsilon_r$ (%) | 0<br>>700 | | 0,8<br>>700 | 1,1<br><700 | 1,0<br>>700 | 1,3<br>>700 |
| Traction à 5°C<br>$\sigma_r$ (daN/cm$^2$)<br>$\varepsilon_r$ (%) | 4<br>100 | | 6<br>>700 | 7,7<br>>700 | 6,8<br>>700 | 8,5<br>>700 |
| Séquence greffée ATG : $-S-CH_2-COOH$<br>Séquence greffée ATP : $-S-CH_2-CH_2-COOH$ | | | | | | |

La comparaison des résultats rassemblées dans le tableau conduit aux conclusions suivantes:

- le remplacement de l'élastomère conventionnel de la composition bitume/élastomère témoin (essai 5.A) par la même quantité pondérale d'un élastomère fonctionnalisé, selon l'invention, par des séquences $-S-CH_2-COOH$ (essai 5.C) ou par des séquences $-S-CH_2-CH_2-COOH$ (essai 5.E) améliore, par un effet de réticulation, la consistance (valeurs de TBA plus élevées), la susceptibilité thermique (indice de PFEIFFER en augmentation) et l'élastoméricité (plus grande élongation en traction et contrainte à l'élongation maximale supérieure) de la composition bitume/élastomère ;

- l'ajout d'un additif réactif, comme par exemple une polyamine (essais 5.D et 5.F) aux compositions bitume/élastomère fonctionnalisé selon l'invention renforce encore, par un effet de réticulation ionomère, la consistance, la susceptibilité thermique et l'élastoméricité desdites compositions bitume/élastomère fonctionnalisé ;
- les compositions bitume/élastomère fonctionnalisé pour lesquelles l'élastomère est fonctionnalisé par des séquences $-S-CH_2-CH_2-COOH$ ont des caractéristiques physicomécaniques supérieures à celles des compositions bitume/élastomère fonctionalisé pour lesquelles l'élastomère est fonctionnalisé par des séquences $-S-CH_2-COOH$, comme il résulte de la comparaison des essais 5.C et 5.E ou des essais 5.D et 5.F mettant en évidence des consistances (TBA), susceptibilités thermiques (indice de PFEIFFER) et élastoméricités (contraintes à l'élongation maximale) plus élevées pour les compositions bitume/élastomère fonctionnalisé du premier type ;
- des compositions concentrées bitume/élastomère fonctionnalisé non gélifiées et ne démixant pas, même après stockage prolongé à température élevée, peuvent être obtenues, par exemple des concentrés à 6 % d'élastomère fonctionnalisé (essai 5.B), lesdites compositions concentrées permettant de produire, par dilution, des compositions bitume/élastomère fonctionnalisé diluées, par exemple à 3,5 % d'élastomère fonctionnalisé, très performantes.

## Revendications

1. Procédé de préparation de compositions bitume/élastomère fonctionnalisé à large intervalle de plasticité, dans lequel on incorpore, à une composante bitumineuse, un élastomère fonctionnalisé comportant un élastomère substrat, ayant une masse moléculaire moyenne en poids $(\overline{M}w)_0$ comprise entre 10000 et 600000 daltons et un indice de polydispersité inférieur à 5, sur lequel sont greffées, en quantité représentant 0,1 à 10 % en poids du substrat, des séquences portant des groupements fonctionnels carboxyliques ou esters, la quantité dudit élastomère fonctionnalisé représentant 0,5% à 25% du poids de la composante bitumineuse, ledit procédé se caractérisant en ce qu'on utilise un élastomère fonctionnalisé qui possède une masse moléculaire moyenne en poids $\overline{M}w$ telle que le rapport

$$\frac{\left|\overline{M}w-(\overline{M}w)_0\right|}{(\overline{M}w)_0}$$

ait une valeur inférieure à 20 % et dont les séquences greffées sur le substrat répondent à la formule

$$-S-\underset{\displaystyle (SH)_z}{\underset{|}{R_1}}-(COOX)_x,$$

dans laquelle $R_1$ désigne un radical hydrocarboné (x+z+1)-valent en $C_1$ à $C_{12}$, X représente H ou un radical monovalent hydrocarboné R en $C_1$ à $C_{12}$, z est égal à zéro ou 1 et x est un nombre entier ayant une valeur allant de 1 à 3 avec $x+z \leq 3$.

2. Procédé selon la revendication 1, caractérisé en ce que ledit rapport

$$\frac{\left|\overline{M}w-(\overline{M}w)_0\right|}{(\overline{M}w)_0}$$

est inférieur à 12 %.

3. Procédé selon la revendication 1 ou 2, caractérisé en ce que le nombre x, dans la formule des séquences

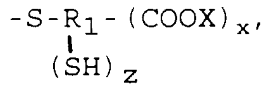

est égal à 1 ou 2.

**4.** Procédé selon l'une des revendications 1 à 3, caractérisé en ce que les séquences greffées sur le substrat élastomère répondent à la formule $-S-R_3-(COOK)_x$, où $R_3$ est un radical hydrocarboné (x+1)-valent en $C_1$ à $C_{12}$.

**5.** Procédé selon la revendication 4, caractérisé en ce que les séquences greffées sur le substrat élastomère répondent à la formule $-S-R_3-(COOH)_x$.

**6.** Procédé selon la revendication 4 ou 5, caractérisé en ce que le radical $R_3$ est en $C_1$ à $C_8$.

**7.** Procédé selon l'une des revendications 1 à 5, caractérisé en ce que chacun des radicaux $R_1$, $R_3$ et R est un radical aliphatique saturé, linéaire ou ramifié, en $C_1$ à $C_{12}$, un radical aliphatique insaturé, linéaire ou ramifié, en $C_2$ à $C_{12}$, un radical cycloaliphatique en $C_4$ à $C_{12}$ ou un radical aromatique en $C_6$ à $C_{12}$, le radical R étant plus spécialement un radical alkyle en $C_1$ à $C_{12}$.

**8.** Procédé selon la revendication 7, caractérisé en ce que chacun des radicaux $R_1$, $R_3$ et R est un radical aliphatique saturé, linéaire ou ramifié, en $C_1$ à $C_8$, un radical aliphatique insaturé, linéaire ou ramifié, en $C_2$ à $C_8$, un radical cycloaliphatique en $C_6$ à $C_8$ ou un radical aromatique en $C_6$ à $C_8$, le radical R étant plus spécialement un radical alkyle en $C_1$ à $C_8$.

**9.** Procédé selon la revendication 3, caractérisé en ce que les séquences greffées sur le substrat sont choisies parmi les séquences $-S-CH_2-COOH$, $-S-CH_2-CH_2-COOH$, $-S-CH_2-CH_2-CH_2-COOH$,

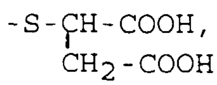 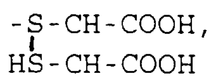 et 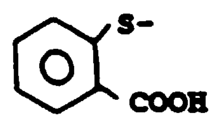

et les séquences correspondantes pour lesquelles le groupement -COOH est remplacé par un groupement ester -COOR', où R' est un radical alkyle en $C_1$ à $C_{12}$ et de préférence en $C_1$ à $C_8$.

**10.** Procédé selon l'une des revendications 1 à 9, caractérisé en ce que l'élastomère substrat est choisi parmi les copolymères statistiques ou séquencé de styrène et d'un diène conjugué.

**11.** Procédé selon la revendication 10, caractérisé en ce que le diène conjugué est choisi dans le groupe constitué par butadiène, isoprène, chloroprène, butadiène carboxylé et isoprène carboxylé.

**12.** Procédé selon la revendication 11, caractérisé en ce que l'élastomère substrat consiste en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé et de styrène et d'isoprène carboxylé, lesdits copolymères étant de préférence des copolymères diséquencés ou triséquencés, avec ou sans charnière statistique.

**13.** Procédé selon l'une des revendications 10 à 12, caractérisé en ce que le copolymère de styrène et de diène conjugué servant d'élastomère substrat possède une teneur pondérale en styrène allant de 5 % à 50 %.

**14.** Procédé selon l'une des revendications 1 à 13, caractérisé en ce que la masse moléculaire moyenne en poids $(\overline{M}w)_0$ de l'élastomère substrat est comprise entre 30000 et 400000 daltons.

**15.** Procédé selon l'une des revendications 1 à 14, caractérisé en ce que l'indice de polydispersité de l'élastomère substrat est compris entre 1 et 3.

**16.** Procédé selon l'une des revendications 1 à 15, caractérisé en ce que l'élastomère foncticnnalisé renferme, en poids de l'élastomère substrat, 0,1% à 6% et de préférence 0,3% à 3% de séquences greffées.

**17.** Procédé selon l'une des revendications 1 à 16, caractérisé en ce que la quantité d'élastomère fonctionnalisé représente 1% à 15% du poids de la composante bitumineuse.

**18.** Procédé selon l'une des revendications 1 à 17, caractérisé en ce que la composante bitumineuse consiste en un ou plusieurs bitumes qui possèdent une viscosité cinématique à 100°C comprise entre $0{,}5x10^{-4}$ $m^2/s$ et $3x10^{-2}$ $m^2/s$ et de préférence entre $1x10^{-4}$ $m^2/s$ et $2x10^{-2}$ $m^2/s$.

**19.** Procédé selon la revendication 18, caractérisé en ce que la composante bitumineuse présente une pénétrabilité à 25°C, définie selon la norme NF T 66004, comprise entre 5 et 800 et de préférence entre 10 et 400.

**20.** Procédé selon l'une des revendications 1 à 19, caractérisé en ce que l'incorporation de l'élastomère fonctionnalisé à la composante bitumineuse est réalisée par malaxage des ingrédients, en opérant à des températures comprises entre 100°C et 230°C et plus particulièrement entre 120°C et 190°C, pendant une durée de 30 minutes à 8 heures, pour former un mélange homogène constituant la composition bitume/élastomère fonctionnalisé.

**21.** Procédé selon la revendication 20, caractérisé en ce que ledit mélange homogène est additionné, en opérant sous agitation à des températures comprises entre 100°C et 230°C et plus particulièrement entre 120°C et 190°C, d'un ou plusieurs additifs susceptibles de réagir avec les groupements fonctionnels carboxyliques ou esters portés par l'élastomère fonctionnalisé.

**22.** Procédé selon la revendication 21, caractérisé en ce que lesdits additifs sont des amines, notamment polyamines, primaires ou secondaires, des alcools, notamment polyols, des aminoalcools, des époxydes ou encores des composés métalliques, notamment composés de métaux des groupes I, II, III et VIII du Tableau Périodique des Eléments.

**23.** Procédé selon la revendication 21 ou 22, caractérisé en ce que la quantité de l'additif réactif ou des additifs réactifs, que l'on incorpore à la composition bitume/élastomère fonctionnalisé, représente 0,01% à 10% et plus particulièrement 0,05% à 5% du poids de la composante bitumineuse présente dans ladite composition.

**24.** Procédé selon l'une des revendications 1 à 23, caractérisé en ce que la composition bitume/élastomère fonctionnalisé est additionnée, en cours de production ou après avoir été produite, de 1 % à 40 % et plus spécialement de 2 % à 30 %, en poids de la composante bitumineuse, d'un agent fluxant, en opérant sous agitation à des températures comprises entre 100°C et 230°C et plus particulièrement entre 120°C et 190°C.

**25.** Procédé selon la revendication 24, caractérisé en ce que ledit agent fluxant est une huile hydrocarbonée présentant un intervalle de distillation à pression atomosphérique, déterminé selon la norme ASTM D 86-67, compris entre 100°C et 600°C et de préférence entre 150°C et 400°C.

**26.** Procédé selon la revendication 25, caractérisé en ce que l'agent fluxant consiste en ladite huile hydrocarbonée et en ce que l'élastomère fonctionnalisé est incorporé à la composante bitumineuse sous la forme d'une solution mère dans l'huile hydrocarbonée formant l'agent fluxant.

**27.** Procédé selon la revendication 26, caractérisé en ce que la quantité d'élastomère fonctionnalisé représente 5% à 40% et plus particulièrement 10% à 30% du poids de l'huile hydrocarbonée.

**28.** Application de la composition bitume/élastomère fonctionnalisé selon l'une des revendications 1 à 27, soit utilisée telle quelle ou bien après dilution par une composante bitumineuse ou par une autre composition bitume/élastomère fonctionnalisé selon l'une des revendications 1 à 27 ayant des caractéristiques différentes, comme liant bitume/élastomère fonctionnalisé convenant notamment, directement ou après mise en émulsion aqueuse, à la réalisation de revêtements routiers du type enduit superficiel, à la production d'enrobés mis en place à chaud ou à froid, ou encore à la réalisation de revêtements d'étanchéité.

**29.** Procédé de préparation d'un élastomère fonctionnalisé constitué d'un élastomère substrat, ayant une masse moléculaire moyenne en poids $(\overline{M}w)_0$ comprise entre 10000 et 600000 daltons et un indice de polydispersité inférieur à 5, sur lequel sont greffées, en quantité représentant 0,1% à 10% en poids du substrat, des séquences portant

des groupements fonctionnels carboxyliques ou esters, ledit élastomère fonctionnalisé possédant une masse moléculaire moyenne en poids Mw telle que le rapport

$$\frac{\left|\overline{M}w - (\overline{M}w)_0\right|}{(\overline{M}w)_0}$$

est inférieur à 20 % et ayant des séquences greffées sur le substrat répondant à la formule

$$\begin{array}{l}-S-R_1-(COOX)_x,\\ \quad\;\;|\\ \quad (SH)_z\end{array}$$

dans laquelle $R_1$ désigne un radical hydrocarboné (x+z+1)-valent en $C_1$ à $C_{12}$, X représente H ou un radical monovalent hydrocarboné R en $C_1$ à $C_{12}$, z est égal à zéro ou 1 et x est un nombre entier ayant une valeur allant de 1 à 3 avec $x+z \leq 3$, lequel procédé se caractérise en ce qu'il consiste à réaliser un greffage en mettant en contact, jusqu'à la formation de l'élastomère fonctionnalisé, (i) l'élastomère substrat avec (ii) un précurseur des séquences à fonctionnalité carboxylique ou ester, consistant en au moins un composé ayant la formule

$$\begin{array}{l}(XOOC)_x-R_1-S-Y,\\ \qquad\qquad\;\;|\\ \qquad\qquad (SH)_z\end{array}$$

dans laquelle Y désigne un atome d'hydrogène ou un reste monovalent

$$\begin{array}{l}-S-R_1-(COOX)_x,\\ \quad\;\;|\\ \quad (SH)_z\end{array}$$

la quantité de précurseur représentant 0,5 % à 25 % du poids de l'élastomère substrat, ladite mise en contact étant réalisée en opérant en masse ou dans un milieu solvant ou/et diluant, à des températures comprises entre 40°C et 250°C et en présence, en poids de l'élastomère substrat, de 0,1% à 1,5% d'un phénol bloqué et de 0% à 2% d'un triphosphite de dialkylphényle.

**30.** Procédé selon la revendication 29, caractérisé en ce que la quantité de phénol bloqué représente 0,1% à 1% en poids de l'élastomère substrat.

**31.** Procédé selon la revendication 29 ou 30, caractérisé en ce que la quantité de triphosphite de dialkylphényle représente 0% à 1,5% en poids de l'élastomère substrat.

**32.** Procédé selon l'une des revendications 29 à 31, caractérisé en ce que le milieu réactionnel de greffage renferme à la fois un phénol bloqué et un triphosphite de dialkylphényle.

**33.** Procédé selon la revendication 32, caractérisé en ce que la quantité pondérale de triphosphite est égale ou supérieure à la quantité pondérale de phénol bloqué.

**34.** Procédé selon l'une des revendications 29 à 33, caractérisé en ce que le phénol bloqué est choisi parmi les composés de formule :

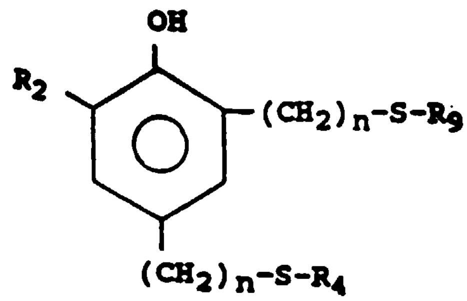

dans laquelle les symboles $R_2$, $R_9$ et $R_4$, identiques ou différents, représentent des radicaux hydrocarbonés aliphatiques monovalents en $C_1$ à $C_{18}$ et plus particulièrement en $C_1$ à $C_{12}$ et n est nombre de 0 à 5.

**35.** Procédé selon l'une des revendications 29 à 34, caractérisé en ce que le triphosphite de dialkylphényle est choisi parmi les composés de formule

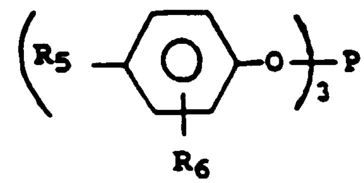

dans laquelle les symboles $R_5$ et $R_6$, identiques ou différents, représentent H ou des radicaux hydrocarbonés aliphatiques monovalents en $C_1$ à $C_{18}$ et plus particulièrement en $C_1$ à $C_{12}$.

**36.** Procédé selon selon l'une des revendications 29 à 35, caractérisé en ce que l'on ajoute, au milieu réactionnel de greffage, un initiateur radicalaire générant des radicaux libres aux températures, comprises entre 40°C et 250°C, choisies pour le greffage, lequel initiateur radicalaire est notamment un composé peroxydé et, par exemple, un peroxyde de dihydrocarbyle, la quantité d'initiateur radicalaire représentant, notamment, 0,01% à 6% et plus particulièrement 0,05% à 3% en poids de l'élastomère substrat.

**37.** Procédé selon l'une des revendications 29 à 36, caractérisé en ce que le greffage est réalisé en milieu solvant ou/et diluant ou en masse et à des températures comprises entre 40°C et 150°C, le composé précurseur des séquences carboxyliques ou esters ayant la formule

$$HS-\underset{(SH)_z}{R_1}-(COOX)_x.$$

**38.** Procédé selon la revendication 37, caractérisé en ce que le précurseur des séquences greffées consiste en au moins un composé ayant la formule $HS-R_3-(COOX)_x$ et notamment la formule $HS-R_3-(COOH)_x$, où $R_3$ est un radical hydrocarboné (x+1)-valent en $C_1$ à $C_{12}$ et de préférence en $C_1$ à $C_8$.

**39.** Procédé selon l'une des revendications 29 à 36, caractérisé en ce que le greffage est réalisé en masse et à des températures comprises entre 150°C et 250°C, le composé précurseur des séquences carboxyliques ou esters ayant la formule

$$(XOOC)_x-\underset{(SH)_z}{R_1}-S-S-\underset{(SH)_z}{R_1}-(COOX)_{x'}.$$

ledit greffage étant avantageusement effectué en l'absence d'initiateur radicalaire.

**40.** Procédé selon la revendication 39, caractérisé en ce que le précurseur des séquences greffées consiste en au moins un composé ayant la formule $(XOOC)_x$-$R_3$-S-S-$R_3$-$(COOX)_x$ et notamment la formule $(HOOC)_x$-$R_3$-S-S-$R_3$-$(COOH)_x$, où $R_3$ est un radical hydrocarboné (x+1)-valent en $C_1$ à $C_{12}$ et de préférence en $C_1$ à $C_8$.

**41.** Procédé selon l'une des revendications 29 et 37 à 40, caractérisé en ce que le nombre x, dans la formule du précurseur des séquences à fonctionnalité carboxylique ou ester, est égal à 1 ou 2.

**42.** Procédé selon l'une des revendications 29 et 37 à 40, caractérisé en ce que, dans la formule du précurseur des séquences à fonctionnalité carboxylique ou ester, chacun des radicaux $R_1$, $R_3$ et R est un radical aliphatique saturé, linéaire ou ramifié, en $C_1$ à $C_{12}$, un radical aliphatique insaturé, linéaire ou ramifié, en $C_2$ à $C_{12}$, un radical cycloaliphatique en $C_4$ à $C_{12}$ ou un radical aromatique en $C_6$ à $C_{12}$, le radical R étant plus spécialement un radical alkyle en $C_1$ à $C_{12}$

**43.** Procédé selon la revendication 42, caractérisé en ce que chacun des radicaux $R_1$, $R_3$ et R est un radical aliphatique saturé, linéaire ou ramifié, en $C_1$ à $C_8$, un radical aliphatique insaturé, linéaire ou ramifié, en $C_2$ à $C_8$, un radical cycloaliphatique en $C_6$ à $C_8$ ou un radical aromatique en $C_6$ à $C_8$, le radical R étant plus spécialement un radical alkyle en $C_1$ à $C_8$.

**44.** Procédé selon la revendication 37, caractérisé en ce que le précurseur des séquences greffées consiste en au moins un composé ayant la formule
$HS-CH_2-COOH$, $HS-CH_2-CH_2-COOH$, $HS-CH_2-CH_2-CH_2-COOH$,

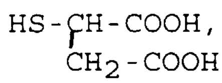 , 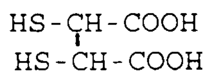 ou 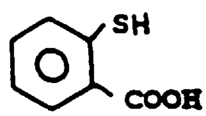

ou encore une formule résultant du remplacement du groupement -COOH, dans l'une ou l'autre des formules précitées, par un groupement ester -COOR', où R' représente un radical alkyle en $C_1$ à $C_{12}$ et de préférence en $C_1$ à $C_8$.

**45.** Procédé selon la revendication 39, caractérisé en ce que le précurseur des séquences greffées consiste en au moins un composé ayant la formule :
$HOOC-CH_2-S-S-CH_2-COOH$,
$HOOC-CH_2-CH_2-S-S-CH_2-CH_2-COOH$,
$HOOC-CH_2-CH_2-CH_2-S-S-CH_2-CH_2-CH_2-COOH$ ou

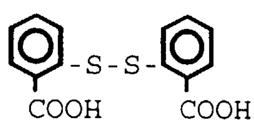

ou un composé dérivant de l'un ou l'autre desdits composés par remplacement du groupement -COOH par un groupement ester -COOR', où R' représente un radical alkyle en $C_1$ à $C_{12}$ et de préférence en $C_1$ à $C_8$.

**46.** Procédé selon l'une des revendications 29 à 45, caractérisé en ce que l'élastomère substrat est choisi parmi les copolymères statistiques ou séquencés de styrène et d'un diène conjugué.

**47.** Procédé selon la revendication 46, caractérisé en ce que le diène conjugué est choisi dans le groupe constitué par butadiène, isoprène, chloroprène, butadiène carboxylé et isoprène carboxylé.

**48.** Procédé selon la revendication 47, caractérisé en ce que l'élastomère substrat consiste en un ou plusieurs copolymères choisis parmi les copolymères séquencés, avec ou sans charnière statistique, de styrène et de butadiène, de styrène et d'isoprène, de styrène et de chloroprène, de styrène et de butadiène carboxylé et de styrène et

d'isoprène carboxylé, lesdits copolymères étant de préférence des copolymères diséquencés ou triséquencés, avec ou sans charnière statistique.

**49.** Procédé selon l'une des revendications 46 à 48, caractérisé en ce que le copolymère de styrène et de diène conjugué servant d'élastomère substrat possède une teneur pondérale en styrène allant de 5% à 50%.

**50.** Procédé selon l'une des revendications 29 à 49, caractérisé en ce que la masse moléculaire moyenne en poids $(\bar{M}w)_0$ de l'élastomère substrat est comprise entre 30000 et 400000 daltons.

**51.** Procédé selon l'une des revendications 29 à 50, caractérisé en ce que l'indice de polydispersité de l'élastomère substrat est compris entre 1 et 3.

## Claims

**1.** Process for preparing bitumen/functionalised elastomer compositions with a broad plasticity range, involving incorporating into a bituminous component a functionalised elastomer that has an elastomer substrate, with a weight-average molecular weight $(\bar{M}w)_0$ of between 10,000 and 600,000 daltons and a polydispersity index of less than 5, onto which are grafted, in a quantity representing 0.1% to 10% by weight of the substrate, sequences carrying carboxyl or ester functional groups, the quantity of said functionalised elastomer representing 0.5% to 25% of the weight of the bituminous component, said process being characterised by the use of a functionalised elastomer possessing a weight-average molecular weight $\bar{M}w$ such that the relation

$$\frac{\left|\bar{M}w - (\bar{M}w)_0\right|}{(\bar{M}w)_0}$$

has a value of less than 20% and of which the sequences grafted $(\bar{M}w)_0$ onto the substrate satisfy the formula

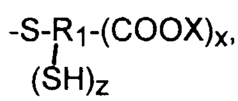

wherein $R_1$ designates a $C_1$ to $C_{12}$ (x+z+1)-valent hydrocarbon radical, X stands for H or a $C_1$ to $C_{12}$ monovalent hydrocarbon radical R, z is equal to zero or 1 and x is an integer having a value from 1 to 3 with $x+z \leq 3$.

**2.** Process according to claim 1, characterised in that said relation

$$\frac{\left|\bar{M}w - (\bar{M}w)_0\right|}{(\bar{M}w)_0}$$

is less than 12%.

**3.** Process according to claim 1 or 2, characterised in that in the formula for the sequences

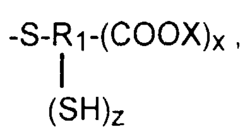

the number x is equal to 1 or 2.

**4.** Process according to any of claims 1 to 3, characterised in that the sequences grafted onto the elastomeric substrate satisfy the formula $-S-R_3-(COOX)_x$, wherein $R_3$ is a $C_1$ to $C_{12}$ (x+1)-valent hydrocarbon radical.

**5.** Process according to claim 4, characterised in that the sequences grafted onto the elastomeric substrate satisfy

the formula $-S-R_3-(COOH)_x$.

**6.** Process according to claim 4 or 5, characterised in that $R_3$ is a $C_1$ to $C_8$ radical.

**7.** Process according to any of claims 1 to 5, characterised in that each of the radicals $R_1$, $R_3$ and R is a $C_1$ to $C_{12}$ saturated, linear or branched aliphatic radical, a $C_2$ to $C_{12}$ unsaturated, linear or branched aliphatic radical, a $C_4$ to $C_{12}$ cycloaliphatic radical or a $C_6$ to $C_{12}$ aromatic radical, with R more specifically being a $C_1$ to $C_{12}$ alkyl radical.

**8.** Process according to claim 7, characterised in that each of the radicals $R_1$, $R_3$ and R is a $C_1$ to $C_8$ saturated, linear or branched aliphatic radical, a $C_2$ to $C_8$ unsaturated, linear or branched aliphatic radical, a $C_6$ to $C_8$ cycloaliphatic radical or a $C_6$ to $C_8$ aromatic radical, with R more specifically being a $C_1$ to $C_8$ alkyl radical.

**9.** Process according to claim 3, characterised in that the sequences grafted onto the substrate are chosen from the sequences $-S-CH_2-COOH$, $-S-CH_2-CH_2-COOH$, $-S-CH_2-CH_2-CH_2-COOH$,

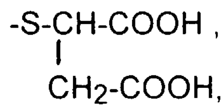 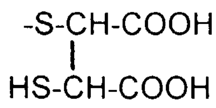 and 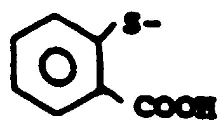

and the corresponding sequences in respect of which the -COOH group is substituted with a -COOR' ester group in which R' is a $C_1$ to $C_{12}$, preferably $C_1$ to $C_8$, alkyl radical.

**10.** Process according to any of claim 1 to 9, characterised in that the elastomer substrate is chosen from among the random copolymers and the block copolymers of styrene and of a conjugated diene.

**11.** Process according to claim 10, characterised in that the conjugated diene is chosen from the group constituted by butadiene, isoprene, chloroprene, carboxylated butadiene and carboxylated isoprene.

**12.** Process according to claim 11, characterised in that the elastomer substrate consists of one or more copolymers chosen from among the block copolymers, with or without a statistical hinge, of styrene and butadiene, styrene and isoprene, styrene and chloroprene, styrene and carboxylated butadiene and styrene and carboxylated isoprene, said copolymers preferably being di-block or tri-block copolymers with or without a statistical hinge.

**13.** Process according to any of claims 10 to 12, characterised in that the styrene and conjugated diene copolymer serving as elastomer substrate has a styrene content of 5% to 50% by weight.

**14.** Process according to any of claims 1 to 13, characterised in that the weight-average molecular weight $(\overline{M}w)_0$ of the elastomer substrate is between 30,000 and 400,000 daltons.

**15.** Process according to any of claims 1 to 14, characterised in that the polydispersity index of the elastomer substrate is between 1 and 3.

**16.** Process according to any of claims 1 to 15, characterised in that the functionalised elastomer includes, by weight of the elastomer substrate, 0.1% to 6% and preferably 0.3% to 3% of grafted sequences.

**17.** Process according to any of claims 1 to 16, characterised in that the quantity of functionalised elastomer represents 1% to 15% by weight of the bituminous component.

**18.** Process according to any of claims 1 to 17, characterised in that the bituminous component consists of one or more bitumens possessing a kinematic viscosity at 100°C of between $0.5x10^{-4}$ $m^2/s$ and $3x10^{-2}$ $m^2/s$ and preferably between $1x10^{-4}$ $m^2/s$ and $2x10^{-2}$ $m^2/s$.

**19.** Process according to claim 18, characterised in that the bituminous component exhibits a penetrability at 25°C, as defined by the NF T 66004 standard, of between 5 and 800, preferably between 10 and 400.

**20.** Process according to any of claims 1 to 19, characterised in that the incorporation of the functionalised elastomer with the bituminous component is accomplished by mixing the ingredients, at working temperatures of between 100°C and 230°C and more particularly between 120°C and 190°C, for a duration of 30 minutes to 8 hours, so as to produce a homogeneous mixture which constitutes the bitumen/functionalised elastomer composition.

**21.** Process according to claim 20, characterised in that to said homogeneous mixture are added, accompanied by stirring at temperatures between 100°C and 230°C and more particularly between 120°C and 190°C, one or more additives capable of reacting with the carboxyl or ester functional groups carried by the functionalised elastomer.

**22.** Process according to claim 21, characterised in that said additives are primary or secondary amines, more particularly polyamines, alcohols, especially polyols, aminoalcohols, epoxides or metallic compounds, notably compounds of metals belonging to groups I, II, III and VIII of the Periodic Table.

**23.** Process according to claim 21 or 22, characterised in that the quantity of reactive additive or additives being incorporated into the bitumen/functionalised elastomer composition represents 0.01% to 10%, more particularly 0.05% to 5%, of the weight of the bituminous component present in said composition.

**24.** Process according to any of claims 1 to 23, characterised by adding to the bitumen/functionalised elastomer composition, in the course of production or after it has been produced, fluxing agent in a proportion from 1% to 40%, more particularly 2% to 30% by weight of the bituminous component, accompanied by stirring at temperatures between 100°C and 230°C, more particularly between 120°C and 190°C.

**25.** Process according to claim 24, characterised in that said fluxing agent is a hydrocarbon oil exhibiting a distillation range at atmospheric pressure, as determined by the ASTM D 86-67 standard, of between 100°C and 600°C and preferably between 150°C and 400°C.

**26.** Process according to claim 25, characterised in that the fluxing agent is said hydrocarbon oil and that the functionalised elastomer is incorporated with the bituminous component in the form of a mother solution in the hydrocarbon oil constituting the fluxing agent.

**27.** Process according to claim 26, characterised in that the quantity of functionalised elastomer represents 5% to 40%, more particularly 10% to 30%, by weight of the hydrocarbon oil.

**28.** Use of the bitumen/functionalised elastomer composition as claimed in any of claims 1 to 27, either employed as such or after diluting it with a bituminous component or with another bitumen/functionalised elastomer composition as claimed in any of claim 1 to 27 having different characteristics, as a bitumen/functionalised elastomer binder suitable in particular, either directly or after placing it in aqueous emulsion, for making surface-coating-type road coverings, for producing hot or cold-applied mixes or for making sealing dressings.

**29.** Process for preparing a functionalised elastomer constituted by an elastomer substrate having a weight-average molecular weight $(\overline{M}w)_0$ of between 10,000 and 600,000 daltons and a polydispersity index of less than 5, onto which are grafted, in a quantity representing 0.1% to 10% by weight of the substrate, sequences carrying carboxyl or ester functional groups, said functionalised elastomer possessing a weight-average molecular weight $\overline{M}w$ such that the relation

$$\frac{\left|\overline{M}w-(\overline{M}w)_0\right|}{(\overline{M}w)_0}$$

is less than 20% and having sequences grafted onto the substrate satisfying the formula

$$-S-\underset{(SH)_z}{\underset{|}{R_1}}-(COOX)_x,$$

wherein $R_1$ designates a $C_1$ to $C_{12}$ (x+z+1)-valent hydrocarbon radical, X stands for H or a $C_1$ to $C_{12}$ monovalent hydrocarbon radical R, z is equal to zero or 1 and x is an integer having a value from 1 to 3 with $x+z \leq 3$, said

method being characterised in that it involves performing grafting by contacting, until the functionalised elastomer is formed, (i) the elastomer substrate with (ii) a precursor of the sequences with carboxyl or ester functionality, consisting of at least one compound having the formula

$$(XOOC)_x - \underset{\substack{| \\ (SH)_z}}{R_1} - S - Y ,$$

in which Y stands for a hydrogen atom or a monovalent group

$$-S-\underset{\substack{| \\ (SH)_z}}{R_1}-(COOX)_x,$$

the quantity of precursor representing 0.5% to 25% of the weight of the elastomer substrate, said contacting being performed in bulk or in a solvent and/or diluting medium, at working temperatures between 40°C and 250°C and in the presence, by weight of the elastomer substrate, of 0.1% to 1.5% of a blocked phenol and of 0% to 2% of a dialkylphenyl triphosphite.

**30.** Process according to claim 29, characterised in that the quantity of blocked phenol represents 0.1% to 1% by weight of the elastomer substrate.

**31.** Process according to claim 29 or 30, characterised in that the quantity of dialkylphenyl triphosphite represents 0% to 1.5% by weight of the elastomer substrate.

**32.** Process according to any of claims 29 to 31, characterised in that the grafting reaction medium contains both blocked phenol and dialkylphenyl triphosphite.

**33.** Process according to claim 32, characterised in that the quantity by weight of triphosphite is the same as or higher than the quantity by weight of blocked phenol.

**34.** Process according to any of claims 29 to 33, characterised in that the blocked phenol is chosen from the compounds of the formula :

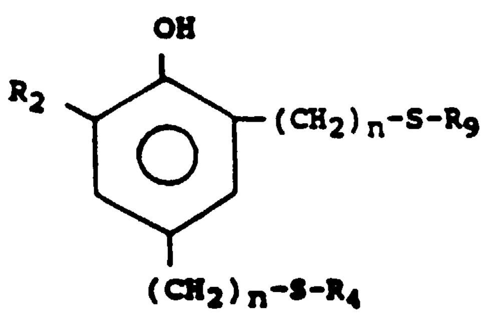

in which the symbols $R_2$, $R_9$ and $R_4$, which are identical or different, represent $C_1$ to $C_{18}$ monovalent aliphatic hydrocarbon radicals, more particularly $C_1$ to $C_{12}$ monovalent aliphatic hydrocarbon radicals, and n is a number from 0 to 5.

**35.** Process according to any of claims 29 to 34, characterised in that the dialkylphenyl triphosphite is chosen from compounds of the formula

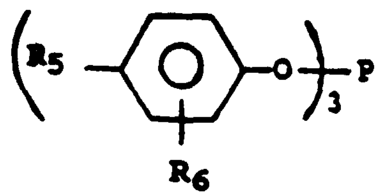

in which the symbols $R_5$ and $R_6$, which are identical or different, represents H or $C_1$ to $C_{18}$ monovalent aliphatic hydrocarbon radicals, more particularly $C_1$ to $C_{12}$ monovalent aliphatic hydrocarbon radicals.

**36.** Process according to any of claims 29 to 35, characterised by adding to the grafting reaction medium a radical initiator which generates free radicals at temperatures of between 40°C and 250°C, chosen for grafting, said radical initiator being in particular a peroxidised compound, for example a dihydrocarbyl peroxide, the quantity of radical initiator representing, in particular, 0.01% to 6%, more especially 0.05% to 3% by weight of the elastomer substrate.

**37.** Process according to any of claims 29 to 36, characterised in that grafting is performed in a solvent and/or diluting medium or in bulk and at temperatures between 40°C and 150°C, the precursor compound of the carboxyl or ester sequences having the formula

$HS\text{-}R_1\text{-}(COOX)_x.$
$\quad\quad |$
$\quad (SH)_z$

**38.** Process according to claim 37, characterised in that the precursor of the grafted sequences consists of at least one compound of formula $HS\text{-}R_3\text{-}(COOX)_x$ and especially the formula $HS\text{-}R_3\text{-}(COOH)_x$, in which $R_3$ is a $C_1$ to $C_{12}$ (x+1)-valent hydrocarbon radical, preferably a $C_1$ to $C_8$ (x+1)-valent hydrocarbon radical.

**39.** Process according to any of claims 29 to 36, characterised in that grafting is performed in bulk and at temperatures between 150°C and 250°C, the precursor compound of the carboxyl or ester sequences having the formula

$(XOOC)_x - R_1 - S - S - R_1 - (COOX)_x,$
$\quad\quad\quad\quad |\quad\quad\quad\quad\quad |$
$\quad\quad\quad (SH)_z \quad\quad\quad (SH)_z$

said grafting being advantageously carried out in the absence of radical initiator.

**40.** Process according to claim 39, characterised in that the precursor of the grafted sequences consists of at least one compound having the formula $(XOOC)_x$- $R_3$- S - S - $R_3$- $(COOX)_x$, and especially the formula $(HOOC)_x$ - $R_3$ - S - S - $R_3$- $(COOH)_x$, in which $R_3$ is a $C_1$ to $C_{12}$ (x+1)-valent hydrocarbon radical, preferably a $C_1$ to $C_8$ (x+1)-valent hydrocarbon radical.

**41.** Process according to any of claims 29 and 37 to 40, characterised in that the number x in the formula for the precursor of the carboxyl or ester functionality sequences is equal to 1 or 2.

**42.** Process according to any of claims 29 and 37 to 40, characterised in that in the formula for the precursor of the carboxyl or ester functionality sequences each of the radicals $R_1$, $R_3$ and R is a $C_1$ to $C_{12}$ saturated, linear or branched aliphatic radical, a $C_2$ to $C_{12}$ unsaturated, linear or branched aliphatic radical, a $C_4$ to $C_{12}$ cycloaliphatic radical or a $C_6$ to $C_{12}$ aromatic radical, the radical R more specifically being a $C_1$ to $C_{12}$ alkyl radical.

**43.** Process according to claim 42, characterised in that each of the radicals $R_1$, $R_3$ and R is a $C_1$ to $C_8$ saturated, linear or branched aliphatic radical, a $C_2$ to $C_8$ unsaturated, linear or branched aliphatic radical, a $C_6$ to $C_8$ cycloaliphatic radical or a $C_6$ to $C_8$ aromatic radical, the radical R more specifically being a $C_1$ to $C_8$ alkyl radical.

44. Process according to claim 37, characterised in that the precursor of the grafted sequences consists of at least one compound having the formula
$HS-CH_2-COOH$, $HS-CH_2-CH_2-COOH$, $HS-CH_2-CH_2-CH_2-COOH$,

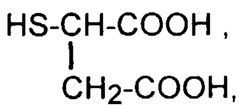 , 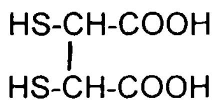 or 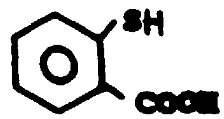

or some other formula resulting from substituting the -COOH group, in one or other of the foregoing formulas, with a -COOR' ester group, wherein R' represents a $C_1$ to $C_{12}$ alkyl radical, preferably a $C_1$ to $C_8$, alkyl radical.

45. Process according to claim 39, characterised in that the precursor of the grafted sequences consists of at least one compound having the formula
$HOOC-CH_2-S-S-CH_2-COOH$, $HOOC-CH_2-CH_2-S-S-CH_2-CH_2-COOH$, $HOOC-CH_2-CH_2-CH_2-S-S-CH_2-CH_2-CH_2-COOH$ or

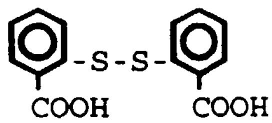

or one compound resulting from substituting the -COOH group, in one or other of the foregoing compounds, with a -COOR' ester group, wherein R' represents a $C_1$ to $C_{12}$ alkyl radical, preferably a $C_1$ to $C_8$, alkyl radical.

46. Process according to any of claim 29 to 45, characterised in that the elastomer substrate is chosen from among the random copolymers and the block copolymers of styrene and of a conjugated diene.

47. Process according to claim 46, characterised in that the conjugated diene is chosen from the group constituted by butadiene, isoprene, chloroprene, carboxylated butadiene and carboxylated isoprene.

48. Process according to claim 47, characterised in that the elastomer substrate consists of one or more copolymers chosen from among the block copolymers, with or without a statistical hinge, of styrene and butadiene, styrene and isoprene, styrene and chloroprene, styrene and carboxylated butadiene and styrene and carboxylated isoprene, said copolymers preferably being di-block or tri-block copolymers with or without a statistical hinge.

49. Process according to any of claims 46 to 48, characterised in that the styrene and conjugated diene copolymer serving as elastomer substrate has a styrene content of 5% to 50% by weight.

50. Process according to any of claims 29 to 49, characterised in that the weight-average molecular weight $(\overline{M}w)_0$ of the elastomer substrate is between 30,000 and 400,000 daltons.

51. Process according to any of claims 29 to 50, characterised in that the polydispersity index of the elastomer substrate is between 1 and 3.

## Patentansprüche

1. Verfahren zur Herstellung von einen weiten Plastizitätsbereich aufweisenden Gemischen aus Bitumen und funktionalisierten Elastomer, bei dem man in eine bituminöse Komponente ein funktionalisiertes Elastomer einarbeitet, das ein Elastomersubstrat mit einem Gewichtsmittel der Molekularmasse $(\overline{M}w)_0$ von 10.000 bis 600.000 Dalton und einem Polydispersitätsindex von unter 5 umfaßt, auf das in einer Menge von 0,1 bis 10 %, bezogen auf das Gewicht des Substrats, Sequenzen mit funktionellen Carboxyl- oder Estergruppen aufgepfropft sind, wobei die Menge des funktionalisierten Elastomers 0,5 bis 25 %, bezogen auf das Gewicht der bituminösen Komponente, ausmacht, wobei das Verfahren dadurch **gekennzeichnet** ist, daß man ein funktionalisiertes Elastomer, mit einem

solchen Gewichtsmittel der Molekularmasse $\overline{M}w$ verwendet, daß das Verhältnis

$$\frac{\left|\overline{M}w-(\overline{M}w)_0\right|}{(\overline{M}w)_0}$$

einen Wert von unter 20 % ausmacht, und dessen auf das Substrat aufgepfropfte Sequenzen der Formel

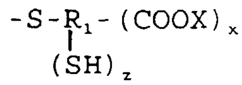

entsprechen, in der $R_1$ einen (x+z+1)-wertigen $C_{1-12}$-Kohlenwasserstoffrest, X H oder einen einwertigen $C_{1-12}$-Kohlenwasserstoffrest R, z 0 oder 1 und x eine ganze Zahl mit einem Wert von 1 bis 3 bei $x+z \leq 3$ bedeuten.

**2.** Verfahren nach Anspruch 1, dadurch gekennzeichnet, daß das Verhältnis

$$\frac{\left|\overline{M}w-(\overline{M}w)_0\right|}{(\overline{M}w)_0}$$

unter 12 % liegt.

**3.** Verfahren nach Anspruch 1 oder 2, dadurch **gekennzeichnet**, daß die Zahl x in der Formel der Sequenzen

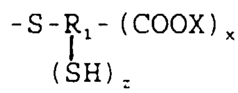

1 oder 2 beträgt.

**4.** Verfahren nach einem der Ansprüche 1 bis 3, dadurch **gekennzeichnet**, daß die auf das Elastomersubstrat aufgepfropften Sequenzen der Formel $-S-R_3-(COOX)_x$ entsprechen, worin $R_3$ einen (x+1)-wertigen $C_{1-12}$-Kohlenwasserstoffrest bedeutet.

**5.** Verfahren nach Anspruch 4, dadurch **gekennzeichnet**, daß die auf das Elastomersubstrat aufgepfropften Sequenzen der Formel $-S-R_3-(COOH)_x$ entsprechen.

**6.** Verfahren nach Anspruch 4 oder 5, dadurch **gekennzeichnet**, daß der Rest $R_3$ ein $C_{1-8}$-Rest ist.

**7.** Verfahren nach einem der Ansprüche 1 bis 5, dadurch **gekennzeichnet**, daß jeder der Reste $R_1$, $R_3$ und R ein gesättigter aliphatischer, unverzweigter oder verzweigter $C_{1-12}$-Rest, ein ungesättigter aliphatischer, unverzweigter oder verzweigter $C_{2-12}$-Rest, ein cycloaliphatischer $C_{4-12}$-Rest oder ein aromatischer $C_{6-12}$-Rest ist und der Rest R insbesondere ein $C_{1-12}$-Alkylrest ist.

**8.** Verfahren nach Anspruch 7, dadurch **gekennzeichnet**, daß jeder der Reste $R_1$, $R_3$ und R ein gesättigter aliphatischer, unverzweigter oder verzweigter $C_{1-8}$-Rest, ein ungesättigter aliphatischer, unverzweigter oder verzweigter $C_{2-8}$-Rest, ein cycloaliphatischer $C_{6-8}$-Rest oder ein aromatischer $C_{6-8}$-Rest ist und der Rest R insbesondere ein $C_{1-8}$-Alkylrest ist.

**9.** Verfahren nach Anspruch 3, dadurch **gekennzeichnet**, daß die auf das Substrat aufgepfropften Sequenzen ausgewählt werden unter den Sequenzen $-S-CH_2-COOH$, $-S-CH_2-CH_2-COOH$, $-S-CH_2-CH_2-CH_2-COOH$,

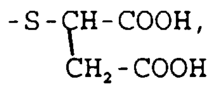 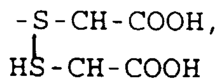 und 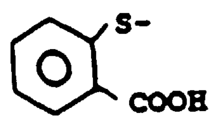

und den entsprechenden Sequenzen, bei denen die Gruppe -COOH durch eine Estergruppe -COOR' ersetzt ist, worin R' einen $C_{1-12}$-, vorzugsweise einen $C_{1-8}$-Alkylrest bedeutet.

**10.** Verfahren nach einem der Ansprüche 1 bis 9, dadurch **gekennzeichnet**, daß das Elastomersubstrat ausgewählt wird unter statistischen Copolymeren oder Blockcopolymeren aus Styrol und einem konjugierten Dien.

**11.** Verfahren nach Anspruch 10, dadurch **gekennzeichnet**, daß das konjugierte Dien ausgewählt wird aus der Gruppe, bestehend aus Butadien, Isopren, Chloropren, carboxyliertem Butadien und carboxyliertem Isopren.

**12.** Verfahren nach Anspruch 11, dadurch **gekennzeichnet**, daß das Elastomersubstrat aus einem oder mehreren Copolymeren besteht, ausgewählt unter Blockcopolymeren, gegebenenfalls mit einem statistischen Gelenk aus Styrol und Butadien, Styrol und Isopren, Styrol und Chloropren, Styrol und carboxyliertem Butadien sowie Styrol und carboxyliertem Isopren, wobei die bevorzugten Copolymere Di- oder Triblockcopolymere gegebenenfalls mit einem statistischen Gelenk sind.

**13.** Verfahren nach einem der Ansprüche 10 bis 12, dadurch **gekennzeichnet**, daß das Copolymer aus Styrol und konjugiertem Dien, das als Elastomersubstrat dient, einen Gewichtsanteil an Styrol von 5 bis 50 % aufweist.

**14.** Verfahren nach einem der Ansprüche 1 bis 13, dadurch **gekennzeichnet**, daß das Gewichtsmittel der Molekularmasse $(\overline{M}w)_0$ des Elastomersubstrats 30.000 bis 400.000 Dalton beträgt.

**15.** Verfahren nach einem der Ansprüche 1 bis 14, dadurch **gekennzeichnet**, daß der Polydispersitätsindex des Elastomersubstrats 1 bis 3 beträgt.

**16.** Verfahren nach einem der Ansprüche 1 bis 15, dadurch **gekennzeichnet**, daß das funktionalisierte Elastomer, bezogen auf das Gewicht des Elastomersubstrats, 0,1 bis 6 % und vorzugsweise 0,3 bis 3 % aufgepfropfte Sequenzen enthält.

**17.** Verfahren nach einem der Ansprüche 1 bis 16, dadurch **gekennzeichnet**, daß die Menge an funktionalisiertem Elastomer 1 bis 15 %, bezogen auf das Gewicht der bituminösen Komponente, beträgt.

**18.** Verfahren nach einem der Ansprüche 1 bis 17, dadurch **gekennzeichnet**, daß die bituminöse Komponente aus einem oder mehreren Bitumina besteht, die eine kinematische Viskosität bei 100°C von $0{,}5 \times 10^{-4}$ $m^2/s$ bis $3 \times 10^{-2}$ $m^2/s$ und vorzugsweise von $1 \times 10^{-4}$ $m^2/s$ bis $2 \times 10^{-2}$ $m^2/s$ besitzen.

**19.** Verfahren nach Anspruch 18, dadurch **gekennzeichnet**, daß die bituminöse Komponente eine Penetrationszahl bei 25°C gemäß der Norm NF T 66004 von 5 bis 800 und vorzugsweise von 10 bis 400 besitzt.

**20.** Verfahren nach einem der Ansprüche 1 bis 19, dadurch **gekennzeichnet**, daß die Einarbeitung des funktionalisierten Elastomers in die bituminöse Komponente durch Mischen der Komponenten bei Temperaturen von 100 bis 230°C und insbesondere von 120 bis 190°C während einer Zeitdauer von 30 Minuten bis 8 Stunden durchgeführt wird, um eine homogene Mischung zu bilden, welche das Gemisch aus Bitumen und funktionalisiertem Elastomer darstellt.

**21.** Verfahren nach Anspruch 20, dadurch **gekennzeichnet**, daß die homogene Mischung unter Rühren bei Temperaturen von 100 bis 230°C und insbesondere von 120 bis 190°C mit einem oder mehreren Additiven versetzt wird, die mit den funktionellen Carboxyl- oder Estergruppen, die durch das funktionalisierte Elastomer eingebracht werden, zu reagieren vermögen.

**22.** Verfahren nach Anspruch 21, dadurch **gekennzeichnet**, daß die Additive primäre oder sekundäre Amine, insbesondere Polyamine, Alkohole, insbesondere Polyole, Aminoalkohole oder Epoxide oder außerdem Metallverbindungen und insbesondere Verbindungen von Metallen der Gruppen I, II, III und VIII des Periodensystems sind.

**23.** Verfahren nach Anspruch 21 oder 22, dadurch **gekennzeichnet**, daß die Menge an reaktionsfähigem Additiv oder reaktionsfähigen Additiven, die man in das Gemisch aus Bitumen und funktionalisiertem Elastomer einarbeitet, 0,01 bis 10 % und insbesondere 0,05 bis 5 %, bezogen auf das Gewicht der im Gemisch vorliegenden bituminösen Komponente, beträgt.

**24.** Verfahren nach einem der Ansprüche 1 bis 23, dadurch **gekennzeichnet**, daß das Gemisch aus Bitumen und funktionalisiertem Elastomer im Laufe seiner Herstellung oder danach mit 1 bis 40 % und insbesondere 2 bis 30 %, bezogen auf das Gewicht der bituminöse Komponente, eines Verflüssigungsmittels unter Rühren bei Temperaturen von 100 bis 230°C und insbesondere von 120 bis 190°C versetzt wird.

**25.** Verfahren nach Anspruch 24, dadurch **gekennzeichnet**, daß das Verflüssigungsmittel ein Kohlenwasserstofföl mit einem Destillationsbereich unter Atmosphärendruck, ermittelt gemäß der Norm ASTM D 86-67, von 100 bis 600°C und vorzugsweise von 150 bis 400°C ist.

**26.** Verfahren nach Anspruch 25, dadurch **gekennzeichnet**, daß das Verflüssigungsmittel im Kohlenwasserstofföl besteht und daß das funktionalisierte Elastomer in die bituminöse Komponente in Form einer Mutterlauge im das Verflüssigungsmittel bildenden Kohlenwasserstofföl eingearbeitet wird.

**27.** Verfahren nach Anspruch 26, dadurch **gekennzeichnet**, daß die Menge an funktionalisiertem Elastomer 5 bis 40 % und insbesondere 10 bis 30 %, bezogen auf das Gewicht des Kohlenwasserstofföls, beträgt.

**28.** Verwendung des Gemisches aus Bitumen und funktionalisiertem Elastomer gemäß einem der Ansprüche 1 bis 27, das als solches oder nach Verdünnung mit einer bituminösen Komponente oder einem anderen Gemisch aus Bitumen und funktionalisiertem Elastomer gemäß einem der Ansprüche 1 bis 27 mit unterschiedlichen Eigenschaften verwendet wird, als Bindemittel aus Bitumen und funktionalisiertem Elastomer, das insbesondere unmittelbar oder nach Emulgierung in Wasser für die Herstellung von Straßendecken vom Typ eines Oberflächenbelags, für die Herstellung von im warmen oder kalten Zustand aufgebrachten Straßenbelägen oder auch für die Herstellung von Dichtungsschürzen geeignet ist.

**29.** Verfahren zur Herstellung eines funktionalisierten Elastomers, bestehend aus einem Elastomersubstrat mit einem Gewichtsmittel der Molekularmasse $(\bar{M}w)_0$ von 10.000 bis 600.000 Dalton und einem Polydispersitätsindex von unter 5, auf das in einer Menge von 0,1 bis 10 %, bezogen auf das Gewicht des Substrats, Sequenzen mit funktionellen Carboxyl- oder Estergruppen aufgepfropft sind, wobei das funktionalisierte Elastomer ein solches Gewichtsmittel der Molekularmasse $\bar{M}w$ aufweist, daß das Verhältnis

$$\frac{\left|\bar{M}w-(\bar{M}w)_0\right|}{(\bar{M}w)_0}$$

unter 20 % ausmacht, und dessen auf das Substrat aufgepfropfte Sequenzen der Formel

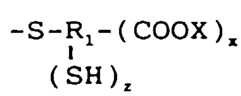

entsprechen, in der $R_1$ einen (x+z+1)-wertigen $C_{1-12}$-Kohlenwasserstoffrest, X H oder einen einwertigen $C_{1-12}$-Kohlenwasserstoffrest R, z 0 oder 1 und x eine ganze Zahl mit einem Wert von 1 bis 3 bei $x+z \leq 3$ bedeuten, wobei das Verfahren dadurch **gekennzeichnet** ist, daß es im Aufpfropfen besteht, indem man bis zur Bildung des funktionalisierten Elastomers (i) das Elastomersubstrat mit (ii) einer Precursorverbindung für die Sequenzen mit Carboxyl- oder Esterfunktionalität, die in wenigstens einer Verbindung der Formel

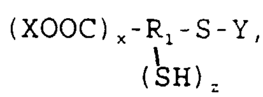

besteht, worin Y ein Wasserstoffatom oder einen einwertigen Rest

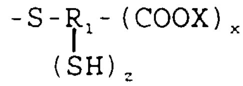

bedeutet und die Menge an Precursorverbindung 0,5 bis 25 %, bezogen auf das Gewicht des Elastomersubstrats, beträgt, in Berührung bringt, wobei die Kontaktierung in der Masse oder in einem Lösungsmittel und/oder Verdünnungsmittel bei Temperaturen von 40 bis 250°C und in Gegenwart von, bezogen auf das Gewicht des Elastomersubstrats, 0,1 bis 1,5 % eines blockierten Phenols und von 0 bis 2 % eines Dialkylphenyltriphosphits durchgeführt wird.

**30.** Verfahren nach Anspruch 29, dadurch **gekennzeichnet**, daß die Menge des blockierten Phenols 0,1 bis 1 %, bezogen auf das Gewicht des Elastomersubstrats, beträgt.

**31.** Verfahren nach Anspruch 29 oder 30, dadurch **gekennzeichnet**, daß die Menge an Dialkylphenyltriphosphit 0 bis 1,5 %, bezogen auf das Gewicht des Elastomersubstrats, beträgt.

**32.** Verfahren nach einem der Ansprüche 29 bis 31, dadurch **gekennzeichnet**, daß das Reaktionsmedium für die Aufpfropfung gleichzeitig ein blockiertes Phenol und ein Dialkylphenyltriphosphit enthält.

**33.** Verfahren nach Anspruch 32, dadurch **gekennzeichnet**, daß die Gewichtsmenge an Triphosphit der Gewichtsmenge an blockkiertem Phenol entspricht oder darüber liegt.

**34.** Verfahren nach einem der Ansprüche 29 bis 33, dadurch **gekennzeichnet**, daß das blockierte Phenol ausgewählt wird unter Verbindungen der Formel

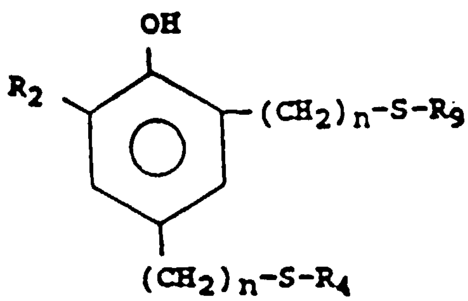

worin die Symbole $R_2$, $R_9$ und $R_4$ gleich oder verschieden sind und einwertige aliphatische $C_{1-18}$- und insbesondere $C_{1-12}$- Kohlenwasserstoffreste darstellen und n eine Zahl von 0 bis 5 bedeutet.

**35.** Verfahren nach einem der Ansprüche 29 bis 34, dadurch **gekennzeichnet**, daß das Dialkylphenyltriphosphit ausgewählt wird unter den Verbindungen der Formel

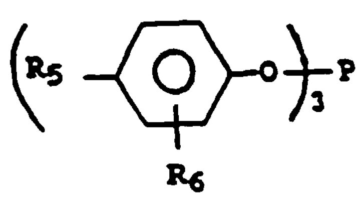

worin die Symbole $R_5$ und $R_6$ gleich oder verschieden sind und H oder einwertige aliphatische $C_{1-18}$- und insbesondere $C_{1-12}$-Kohlenwasserstoffreste darstellen.

**36.** Verfahren nach einem der Ansprüche 29 bis 35, dadurch **gekennzeichnet**, daß man dem Reaktionsmedium für die Aufpfropfung einen Radikalinitiator zusetzt, der bei Temperaturen von 40 bis 250°C, die für die Aufpfropfung

ausgewählt werden, freie Radikale erzeugt und der Radikalinitiator insbesondere eine Peroxidverbindung wie z. B. ein Dikohlenwasserstoffperoxid darstellt, wobei die Menge an Radikalinitiator insbesondere 0,01 bis 6 % und ganz besonders 0,05 bis 3 %, bezogen auf das Gewicht des Elastomersubstrats, beträgt.

**37.** Verfahren nach einem der Ansprüche 29 bis 36, dadurch **gekennzeichnet**, daß die Aufpfropfung in einem Lösungsmittel und/oder Verdünnungsmittel oder in der Masse und bei Temperaturen von 40 bis 150°C durchgeführt wird, wobei die Precursorverbindung für die Carboxyl- oder Estersequenzen die Formel

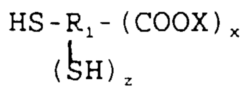

aufweist.

**38.** Verfahren nach Anspruch 37, dadurch **gekennzeichnet**, daß die Precursorverbindung für die aufgepfropften Sequenzen in wenigstens einer Verbindung der Formel HS-$R_3$-$(COOX)_x$ und insbesondere der Formel HS-$R_3$-$(COOH)_x$ besteht, worin $R_3$ einen (x+1)-wertigen $C_{1-12}$- und insbesondere $C_{1-8}$-Kohlenwasserstoffrest darstellt.

**39.** Verfahren nach einem der Ansprüche 29 bis 36, dadurch **gekennzeichnet**, daß die Aufpfropfung in der Masse und bei Temperaturen von 150 bis 250°C durchgeführt wird, wobei die Precursorverbindung der Carboxyl- oder Estersequenzen die Formel

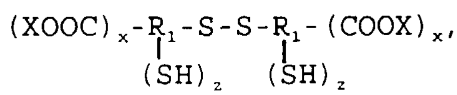

aufweist und die Aufpfropfung vorteilhafterweise in Abwesenheit eines Radikalinitiators durchgeführt wird.

**40.** Verfahren nach Anspruch 39, dadurch **gekennzeichnet**, daß die Precursorverbindung für die aufgepfropften Sequenzen in wenigstens einer Verbindung der Formel $(XOOC)_x$-$R_3$-S-S-$R_3$-(COOX) und insbesondere der Formel $(HOOC)_x$-$R_3$-S-S-$R_3$-$(COOH)_x$ besteht, worin $R_3$ einen (x+1)-wertigen $C_{1-12}$- und insbesondere $C_{1-8}$-Kohlenwasserstoffrest darstellt.

**41.** Verfahren nach einem der Ansprüche 29 und 37 bis 40, dadurch **gekennzeichnet**, daß die Zahl x in der Formel der Precursorverbindung für die Sequenzen mit Carboxyl- oder Esterfunktionalität 1 oder 2 beträgt.

**42.** Verfahren nach einem der Ansprüche 29 und 37 bis 40, dadurch **gekennzeichnet**, daß in der Formel der Precursorverbindung für die Sequenzen mit Carboxyl- oder Esterfunktionalität jeder der Reste $R_1$, $R_3$ und R ein gesättigter aliphatischer, unverzweigter oder verzweigter $C_{1-12}$-Rest, ein ungesättigter aliphatischer, unverzweigter oder verzweigter $C_{2-12}$-Rest, ein cycloaliphatischer $C_{4-12}$-Rest oder ein aromatischer $C_{6-12}$-Rest ist und der Rest R insbesondere ein $C_{1-12}$-Alkylrest ist.

**43.** Verfahren nach Anspruch 42, dadurch **gekennzeichnet**, daß jeder der Reste $R_1$, $R_3$ und R ein gesättigter aliphatischer, unverzweigter oder verzweigter $C_{1-8}$ -Rest, ein ungesättigter aliphatischer, unverzweigter oder verzweigter $C_{2-8}$-Rest, ein cycloaliphatischer $C_{6-8}$-Rest oder ein aromatischer $C_{6-8}$-Rest ist und der Rest R insbesondere ein $C_{1-8}$-Alkylrest ist.

**44.** Verfahren nach Anspruch 37, dadurch **gekennzeichnet**, daß die Precursorverbindung für die aufgepfropften Sequenzen in wenigstens einer Verbindung der Formel HS-$CH_2$-COOH, HS-$CH_2$-$CH_2$-COOH, HS-$CH_2$-$CH_2$-$CH_2$-COOH,

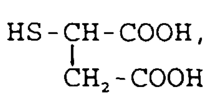 , 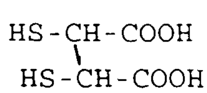

oder

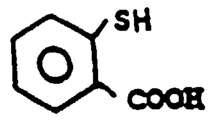

oder auch der Formel besteht, die man durch Ersatz der Gruppe -COOH in der einen oder anderen der erwähnten Formeln durch eine Estergruppe -COOR' erhält, worin R' einen $C_{1-12}$- und vorzugsweise $C_{1-8}$-Alkylrest darstellt.

**45.** Verfahren nach Anspruch 39, dadurch gekennzeichnet, daß die Precursorverbindung für die aufgepfropften Sequenzen in wenigstens einer Verbindung der Formel
$HOOC-CH_2-S-S-CH_2-COOH$, $HOOC-CH_2-CH_2-S-S-CH_2-CH_2-COOH$, $HOOC-CH_2-CH_2-CH_2-S-S-CH_2-CH_2-CH_2-COOH$ oder

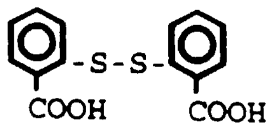

oder einer Verbindung besteht, die man durch Ersatz der Gruppe -COOH in der einen oder anderen der erwähnten Verbindungen durch eine Estergruppe -COOR' erhält, worin R' einen $C_{1-12}$- und vorzugsweise $C_{1-8}$-Alkylrest darstellt.

**46.** Verfahren nach einem der Ansprüche 29 bis 45, dadurch gekennzeichnet, daß das Elastomersubstrat ausgewählt wird unter statistischen Copolymeren oder Blockcopolymeren aus Styrol und einem konjugierten Dien.

**47.** Verfahren nach Anspruch 46, dadurch gekennzeichnet, daß das konjugierte Dien ausgewählt wird aus der Gruppe, bestehend aus Butadien, Isopren, Chloropren, carboxyliertem Butadien und carboxyliertem Isopren.

**48.** Verfahren nach Anspruch 47, dadurch gekennzeichnet, daß das Elastomersubstrat aus einem oder mehreren Copolymeren besteht, ausgewählt unter Blockcopolymeren, gegebenenfalls mit einem statistischen Gelenk, aus Styrol und Butadien, Styrol und Isopren, Styrol und Chloropren, Styrol und carboxyliertem Butadien sowie Styrol und carboxyliertem Isopren, wobei die bevorzugten Copolymere Di- oder Triblockcopolymere gegebenenfalls mit einem statistischen Gelenk sind.

**49.** Verfahren nach einem der Ansprüche 46 bis 48, dadurch gekennzeichnet, daß das Copolymer aus Styrol und konjugiertem Dien, daß als Elastomersubstrat dient, einen Gewichtsanteil an Styrol von 5 bis 50% aufweist.

**50.** Verfahren nach einem der Ansprüche 29 bis 49, dadurch gekennzeichnet, daß das Gewichtsmittel der Molekularmasse $(\overline{M}w)_0$ des Elastomersubstrats 30.000 bis 400.000 Dalton beträgt.

**51.** Verfahren nach einem der Ansprüche 29 bis 50, dadurch gekennzeichnet, daß der Polydispersitätsindex des Elastomersubstrats 1 bis 3 beträgt.